(19)

Europäisches Patentamt
European Patent Office
Office européen des brevets

(11) **EP 4 503 787 A1**

(12) **EUROPEAN PATENT APPLICATION**
published in accordance with Art. 153(4) EPC

(43) Date of publication:
05.02.2025 Bulletin 2025/06

(51) International Patent Classification (IPC):
*H04W 64/00* (2009.01)

(21) Application number: 23777884.0

(22) Date of filing: 17.03.2023

(52) Cooperative Patent Classification (CPC):
H04W 64/00; H04L 5/0051; H04W 16/28

(86) International application number:
PCT/CN2023/082231

(87) International publication number:
WO 2023/185510 (05.10.2023 Gazette 2023/40)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.03.2022 CN 202210312867

(71) Applicant: ZTE Corporation
Shenzhen, Guangdong 518057 (CN)

(72) Inventors:
• GUO, Xiaojiang
Shenzhen, Guangdong 518057 (CN)
• LI, Jie
Shenzhen, Guangdong 518057 (CN)

(74) Representative: Savi, Massimiliano et al
Notarbartolo & Gervasi S.p.A.
Viale Achille Papa, 30
20149 Milano (IT)

(54) **POSITION MEASUREMENT METHOD, SIGNAL ADJUSTMENT APPARATUS, BASE STATION, TERMINAL, AND STORAGE MEDIUM**

(57) Disclosed in the present application are a position measurement method, a signal adjustment apparatus, a base station, a terminal, a storage medium and a program product. The position measurement method is applied to the signal adjustment apparatus, and comprises: receiving a target reference signal, and sending the target reference signal to a receiving apparatus by using a target codebook, wherein the target codebook is used for adjusting a beam of the signal received by a signal adjustment apparatus into a beam corresponding to the target codebook; and a signal feature of the target reference signal is used for determining the position of the receiving apparatus relative to the signal adjustment apparatus.

FIG. 1

**Description**

**CROSS-REFERENCE TO RELATED APPLICATION**

This application is filed on the basis of Chinese patent application No. 202210312867.5 filed March 28, 2022, and claims priority of the Chinese patent application. The disclosure of the Chinese application is incorporated herein by reference in its entirety.

**TECHNICAL FIELD**

The present disclosure relates to the field of communications technologies, in particular to a position measurement method, a signal adjustment apparatus, a base station, a terminal device, a computer storage medium, and a computer program product.

**BACKGROUND**

At present, reconfigurable intelligent surfaces (RISs) and repeaters can help improve wireless signal coverage in blind spots and enhance the rank of hotspot areas. Therefore, RISs and repeaters have gradually become popular research directions of the 5th Generation (5G) and 6th Generation (6G) mobile communications technologies.

Far-field beams and near-field beams of RISs and repeaters have different coverage characteristics. It is great significant to correctly distinguish between far field and near field for designing more suitable codebook of RISs and repeaters and improving the coverage capability of RISs and repeaters. At present, conventional far-field and near-field measurement are usually based on distance or time-delay measurement, which has strict requirements on time-delay, an amplitude of a radio frequency (RF) device, etc. These requirements lead to relatively high device costs and inconvenience in measurements.

**SUMMARY**

The following is a summary of the subject matters described in detail herein. This summary is not intended to limit the scope of protection of the claims.

Embodiments of the present disclosure provide a position measurement method, a signal adjustment apparatus, a base station, a terminal device, a computer storage medium, and a computer program product, in order to easily and effectively measure a position of a target so as to determine far-field and near-field position characteristics of the target relative to a signal node.

In accordance with a first aspect of the present disclosure, an embodiment provides a position measurement method, performed by a signal adjustment apparatus. The position measurement method includes: receiving a target reference signal and sending the target reference signal to a receiving apparatus using a target codebook, where the target codebook is used to adjust a beam of a signal received by the signal adjustment apparatus to a beam corresponding to the target codebook, and a signal characteristic of the target reference signal is used to determine a position of the receiving apparatus relative to the signal adjustment apparatus.

In accordance with a second aspect of the present disclosure, an embodiment further provides a position measurement method, performed by a receiving apparatus. The position measurement method includes: receiving a target reference signal, where the target reference signal is received by a signal adjustment apparatus from a transmitting apparatus and sent to the receiving apparatus using a target codebook, the target codebook being used by the signal adjustment apparatus to adjust a beam of a received signal to a beam corresponding to the target codebook; and determining a position of the transmitting apparatus relative to the signal adjustment apparatus based on a signal characteristic of the detected target reference signal.

In accordance with a third aspect of the present disclosure, an embodiment further provides a position measurement method, performed by a transmitting apparatus. The position measurement method includes: sending a target reference signal to a signal adjustment apparatus such that the signal adjustment apparatus sends the target reference signal to a receiving apparatus using a target codebook, where the target codebook is used by the signal adjustment apparatus to adjust a beam of a received signal to a beam corresponding to the target codebook; receiving a target measurement signal sent by the receiving apparatus, where the target measurement signal is obtained by the receiving apparatus according to a signal characteristic of the target reference signal; and determining a position of the receiving apparatus relative to the signal adjustment apparatus according to the target measurement signal.

In accordance with a fourth aspect of the present disclosure, a further embodiment provides a position measurement method, performed by a receiving apparatus. The position measurement method includes: receiving a target reference signal sent by a signal adjustment apparatus using a target codebook, where the target codebook is used by the signal adjustment apparatus to adjust a beam of a received signal to a beam corresponding to the target codebook; obtaining a target measurement signal according to a signal characteristic of the target reference signal; and sending the target measurement signal to a transmitting apparatus such that the transmitting apparatus determines a position of the receiving apparatus relative to the signal adjustment apparatus according to the target measurement signal.

In accordance with a fifth aspect of the present disclosure, an embodiment further provides a signal adjustment apparatus, including: a memory, a processor, and a computer program stored in the memory and executable by the processor, where the computer program, when executed by the processor, causes the processor to implement the position measurement method of the first aspect.

In accordance with a sixth aspect of the present disclosure, an embodiment further provides a base station, including: a memory, a processor, and a computer program stored in the memory and executable by the processor, where the computer program, when executed by the processor, causes the processor to implement the position measurement method of the second aspect and the third aspect.

In accordance with a seventh aspect of the present disclosure, an embodiment further provides a terminal device, including: a memory, a processor, and a computer program stored in the memory and executable by the processor, where the computer program, when executed by the processor, causes the processor to implement the position measurement method of the fourth aspect.

In accordance with an eighth aspect of the present disclosure, an embodiment further provides a computer-readable storage medium storing computer-executable instructions for performing the position measurement method described above.

In accordance with a ninth aspect of the present disclosure, an embodiment further provides a computer program product, including a computer program or computer instructions stored in a computer-readable storage medium, from which a processor of a computer device reads the computer program or the computer instructions, where the computer program or the computer instructions, when executed by the processor, cause the computer device to perform the position measurement method described above.

In the embodiments of the present disclosure, the signal adjustment apparatus receives the target reference signal from the transmitting apparatus, and then sends the target reference signal to the receiving apparatus using the target codebook, such that the receiving apparatus determines a position of the transmitting apparatus relative to the signal adjustment apparatus according to the signal characteristic of the target reference signal. In other words, through the target codebook, the target reference signal can be accurately sent to the receiving apparatus in a form of a beam corresponding to the target codebook, which facilitates subsequent position measurement by the receiving apparatus. Different from the related technology, the receiving apparatus can perform position measurement using the signal characteristic of the detected target reference signal, instead of performing position measurement based on distance or time-delay. This reduces harsh requirements on time-delay, an amplitude of an RF device, etc., and optimizes the measurement mode and reduces measurement costs. Therefore, the embodiments of the present disclosure can simply and effectively realize the position measurement of a target while reducing the measurement costs, thereby filling the technical gaps of the existing measurement method.

Additional features and advantages of the present disclosure will be set forth in the subsequent description, and in part will become apparent from the description, or may be learned by practice of the present disclosure. The purposes and other advantages of the present disclosure can be realized and obtained by structures particularly noted in the description, the claims and the accompanying drawings.

## BRIEF DESCRIPTION OF DRAWINGS

The accompanying drawings are provided for a further understanding of the technical schemes of the present disclosure and constitute a part of the description. The accompanying drawings are used to explain the technical schemes of the present disclosure together with the embodiments of the present disclosure, and not intended to limit the technical schemes of the present disclosure.

FIG. 1 is a schematic diagram of a system architecture for performing a position measurement method provided by an embodiment of the present disclosure;

FIG. 2 is a flowchart of a position measurement method on a signal adjustment apparatus side provided by an embodiment of the present disclosure;

FIG. 3 is a schematic diagram indicating target beams in an azimuth dimension provided by an embodiment of the present disclosure;

FIG. 4 is a schematic diagram indicating target beams in an elevation dimension provided by an embodiment of the present disclosure;

FIG. 5 is a schematic diagram indicating target beams in two dimensions provided by an embodiment of the present disclosure;

FIG. 6 is a flowchart of a position measurement method on a signal adjustment apparatus side provided by another embodiment of the present disclosure;

FIG. 7 is a flowchart of a position measurement method on a base station side provided by an embodiment of the present disclosure;

FIG. 8 is a flowchart for determining a position of a terminal device relative to a signal adjustment apparatus in a position measurement method on a base station side according to an embodiment of the present disclosure;

FIG. 9 is a schematic diagram of an array element of a terminal device and a signal adjustment apparatus according to an embodiment of the present disclosure;

FIG. 10 is a schematic diagram illustrating relationships between phases of target beams and center angles of corresponding codebooks measured by a terminal device and a signal adjustment apparatus under different distance conditions according to an embodiment of the present disclosure;

FIG. 11 is a schematic diagram illustrating relationships between angles and beam phases theoretically calculated under a near-field condition and between angles and beam phases approximately calculated using the principle of stationary phase according to an embodiment of the present disclosure;

FIG. 12 is a flowchart of a position measurement method on a base station side provided by another embodiment of the present disclosure;

FIG. 13 is a flowchart for determining a position of a terminal device relative to a signal adjustment apparatus in a position measurement method on a base station side according to another embodiment of the present disclosure; and

FIG. 14 is a flowchart of a position measurement method on a terminal device side provided by an embodiment of the present disclosure.

## DETAILED DESCRIPTION

Objectives, technical schemes and advantages of the present disclosure will be clearer from a detailed description of embodiments of the present disclosure in conjunction with the accompanying drawings. It should be understood that the specific embodiments described herein are only intended to explain the present disclosure, and shall not be construed to limit the present disclosure.

It is to be noted that although a logical order is shown in the flowcharts, the steps shown or described may be performed, in some cases, in a different order from the order shown or described in the flowcharts. The terms such as "first" and "second" in the description, claims and above-mentioned drawings are intended to distinguish between similar objects and are not necessarily to describe a specific order or sequence.

The present disclosure provides a position measurement method, a signal adjustment apparatus, a base station, a terminal device, a storage medium, and a computer program product. A position measurement method of an embodiment performed by a signal adjustment apparatus includes: receiving a target reference signal and sending the target reference signal to a receiving apparatus using a target codebook. The target codebook is used to adjust a beam of a signal received by the signal adjustment apparatus to a beam corresponding to the target codebook, and a signal characteristic of the target reference signal is used to determine a position of the receiving apparatus relative to the signal adjustment apparatus. A position measurement method of another embodiment performed by a receiving apparatus includes: receiving a target reference signal which is received by a signal adjustment apparatus from a transmitting apparatus and sent to the receiving apparatus using a target codebook, where the target codebook is used by the signal adjustment apparatus to adjust a beam of a received signal to a beam corresponding to the target codebook; and determining a position of the transmitting apparatus relative to the signal adjustment apparatus based on a signal characteristic of the detected target reference signal. A position measurement method of another embodiment performed by a transmitting apparatus includes: sending a target reference signal to a signal adjustment apparatus such that the signal adjustment apparatus sends the target reference signal to a receiving apparatus using a target codebook which is used by the signal adjustment apparatus to adjust a beam of a received signal to a beam corresponding to the target codebook; receiving a target measurement signal sent by the receiving apparatus, where the target measurement signal is obtained by the receiving apparatus according to a signal characteristic of the target reference signal; and determining a position of the receiving apparatus relative to the signal adjustment apparatus according to the target measurement signal. A position measurement method of another embodiment performed by a receiving apparatus includes: receiving a target reference signal sent by a signal adjustment apparatus using a target codebook which is used by the signal adjustment apparatus to adjust a beam of a received signal to a beam corresponding to the target codebook; obtaining a target measurement signal according to a signal characteristic of the detected target reference signal; and sending the target measurement signal to a transmitting apparatus such that the transmitting apparatus determines a position of the receiving apparatus relative to the signal adjustment apparatus according to the target measurement signal. In the above embodiments, the signal adjustment apparatus receives the target reference signal from the transmitting apparatus, and then sends the target reference signal to the receiving apparatus using the target codebook, such that the receiving apparatus determines a position of the transmitting apparatus relative to the signal adjustment apparatus according to the signal characteristic of the target reference signal. In other words, through the target codebook, the target reference signal can be accurately sent to the receiving apparatus in a form of a beam corresponding to the target codebook, which facilitates subsequent position measurement by the receiving apparatus. Different from the related technology, the receiving apparatus can perform position measurement using the signal characteristic of the detected target reference signal, instead of performing position measurement based on distance or time-delay. This reduces harsh requirements on time-delay, an amplitude of an RF device, etc., and optimizes the measurement mode and reduces measurement costs. Therefore, the embodiments of the present disclosure can simply and effectively realize the position measurement of a target while reducing the measurement costs, and further determine, based on a measured position signal of the target, far-field and near-field characteristics of the target relative to the signal adjustment apparatus, so as to carry out the overall communication design more accurately, thereby filling the technical gaps of the existing measurement method.

The embodiments of the present disclosure will be further explained below in conjunction with the accompanying drawings.

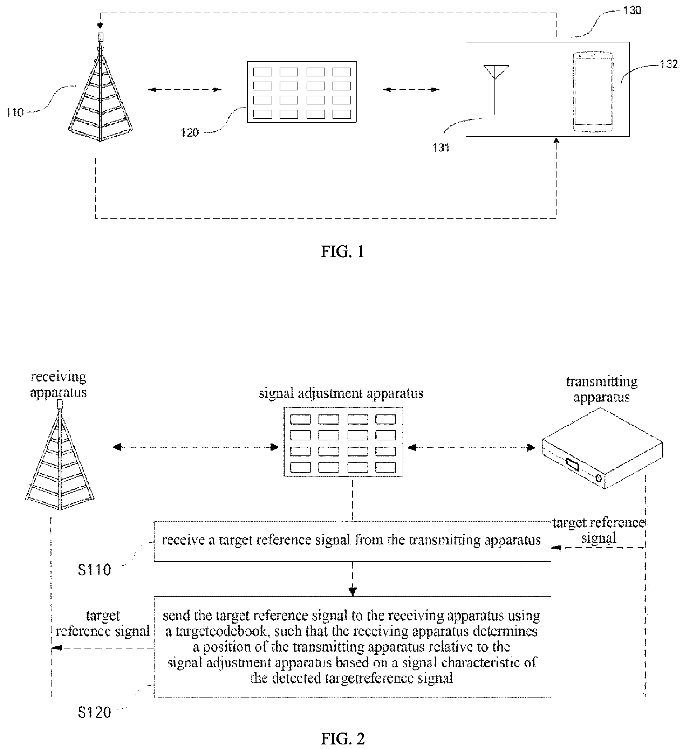

FIG. 1 is a schematic diagram of an implementation environment for performing a position measurement method provided by an embodiment of the present disclosure.

In the example shown in FIG. 1, the implementation environment includes a base station 110, a signal adjustment apparatus 120, and a terminal device 130. Both the signal adjustment apparatus 120 and the terminal device 130 can receive a wireless signal sent by the base station 110, and both can send a wireless signal to the base station 110. The signal adjustment apparatus 120 and the terminal device 130 can also send or receive a wireless signal to/from each other.

It should be noted that the signal adjustment apparatus 120 and the terminal device 130 can move on the radiating spherical surface formed by the base station 110 when the base station 110 radiates signals to the outside, such that the wireless signal sent by the base station 110 can be received at different spatial positions. In a specific scenario, positions of the signal adjustment apparatus 120 and the terminal device 130 relative to the base station 110 can be set according to an actual application condition. For example, in a specific scenario, when positions of the signal adjustment apparatus 120 and the terminal device 130 are determined relative to the base station 110, the position measurement method of the present embodiment can be performed in this scenario, that is, a position of the terminal device 130 relative to the signal adjustment apparatus 120 is measured.

In another possible implementation, the signal adjustment apparatus 120 may be a RIS. Compared with large-scale MIMO in the conventional technology, RIS can bring a signal-to-noise ratio gain proportional to the square of the number of surface cells, as RIS corresponds to a higher system capacity. Therefore, RIS can achieve higher signal-to-noise ratio gain than large-scale MIMO. As a passive device, RIS can use, by adjusting its own electromagnetic unit, a related beam to send a received wireless signal. For example, when receiving the wireless signal from the base station 110, the RIS adjusts its own electromagnetic unit to use a transmit beam to send the wireless signal outward.

In another possible implementation, the signal adjustment apparatus 120 may be a repeater. Compared with a network node in the conventional technology, the repeater has an antenna, which can expand a communication distance, increase the maximum number of nodes, and use different communication rates in various network segments, thereby improving the network reliability. The repeater may generate a related beam to send the received wireless signal through the related beam. For example, when receiving the wireless signal from the base station 110, the repeater generates a transmit beam to send the wireless signal outward through the transmit beam.

In a possible implementation, as shown in FIG. 1, the terminal device 130 may include a first signal receiving module 131 and a first signal sending module 132 which are communicatively connected in a wired or wireless manner. Here, the first signal receiving module 131 can receive the wireless signal sent by the base station 110 or the wireless signal sent by the signal adjustment apparatus 110 within the range of the radiating spherical surface, and send the received wireless signal to the first signal sending module 132 such that the first signal sending module 132 can output the corresponding wireless signal. In some examples, the first signal receiving module 131 may be a receiving antenna module and the first signal sending module 132 may be a sending antenna module. The receiving antenna module and the sending antenna module are communicatively connected in a wired manner, for example, a signal cable. In some other examples, the first signal receiving module 131 may be an apparatus including a receiving antenna module and a wireless communication module, which are electrically connected with each other. The first signal sending module 132 may be a sending antenna module, and the wireless communication module is communicatively connected with the sending antenna module in a wireless manner, for example, Bluetooth or Wi-Fi.

In another possible implementation, the terminal device 130 may be referred to as an access terminal device, user equipment (UE), a subscriber unit, a subscriber station, a mobile station, a mobile console, a remote station, a remote terminal device, a mobile device, a user terminal device, a wireless communication device, a user agent, or a user apparatus. For example, the terminal device 130 may be a cellular telephone, a cordless telephone, a Session Initiation Protocol (SIP) telephone, a Wireless Local Loop (WLL) station, a Personal Digital Assistant (PDA), a handheld device having a wireless communication function, a computing device or another processing device connected to a wireless modem, a vehicle onboard device, a wearable device, a terminal device in a 5G network or in a future network more advanced than 5G, etc. This embodiment is not specifically limited thereto.

The base station 110 has at least a function of sending a wireless signal outward based on preset operation logic or a function of sending a wireless signal outward under the control of an operator. The base station 110 may be a general mobile communication base station or a millimeter wave AAS base station, which is not specifically limited herein.

The signal adjustment apparatus 120 has at least functions of receiving a target reference signal and sending the target reference signal to a receiving apparatus using a target codebook which is used to adjust a beam of a signal received by the signal adjustment apparatus 120 to a beam corresponding to the target codebook. A signal characteristic of the target reference signal is used to determine a position of the receiving apparatus relative to the signal adjustment apparatus 130.

In a possible implementation, the receiving apparatus is the base station 110, and the signal adjustment apparatus 120 has at least functions of receiving the target reference signal from the base station 110 and sending the target reference signal to the base station 110 using the target codebook. For example, in response to an operation performed by an operator on the signal adjustment apparatus 120, the signal adjustment apparatus 120 can receive the target reference signal from the terminal device 130 and send the target reference signal to the base station 110 using the target codebook, or receive the target reference signal from the base station 110 and send the target reference signal to the terminal device 130 using the target codebook.

In another possible implementation, the receiving apparatus is the terminal device 130, and the signal adjustment apparatus 120 has at least functions of receiving the target reference signal and sending the target reference signal to the terminal device 130 using the target codebook, such that the terminal device 130 obtains a target measurement signal according to a signal characteristic of the target reference signal, and sends the target measurement signal to the base station 110 to determine a position of the terminal device 130 relative to the signal adjustment apparatus 120. For example, in response to an operation performed by an operator on the signal adjustment apparatus 120, the signal adjustment apparatus 120 can receive the target reference signal and send the target reference signal to the terminal device 130 using the target codebook.

The terminal device 130 has at least functions of receiving the target reference signal sent by the signal adjustment apparatus 120 using the target codebook, obtaining the target measurement signal based on the signal characteristic of the detected target reference signal, and sending the target measurement signal to the base station 110, etc. For example, in response to an operation performed by an operator on the terminal device 130, the terminal device 130 can receive reference signal indication information sent by the base station 110. When it is determined based on the reference signal indication information that the target reference signal has been received, the terminal device 130 obtains the target measurement signal based on the target reference signal and sends the target measurement signal to the base station 110.

It should be noted that the functions of the base station 110, the signal adjustment apparatus 120, and the terminal device 130 can be applied to different application scenarios, which is not limited herein.

It is to be understood by those having ordinary skill in the art that the implementation environment may be applied to a 5G or 6G communications network system, or subsequent evolved mobile communications network systems, etc., and this embodiment is not specifically limited thereto.

Those having ordinary skill in the art may understand that the implementation environment shown in FIG. 1 does not constitute a limitation on the embodiments of the present disclosure, and there may be more or fewer components than illustrated, or some of the components may be combined, or a different arrangement of the components may be used.

Based on the above implementation environment, various embodiments of the position measurement method of the present disclosure are described below.

FIG. 2 is a flowchart of a position measurement method provided by an embodiment of the present disclosure. The position measurement method is performed by a signal adjustment apparatus, for example, the signal adjustment apparatus 120 in the embodiment shown in FIG. 1. The position measurement method may include, but is not limited to following steps 110 and 120.

At the step S 110, a target reference signal from a transmitting apparatus is received.

At the step S120, the target reference signal is sent to a receiving apparatus using a target codebook, such that the receiving apparatus determines a position of the transmitting apparatus relative to the signal adjustment apparatus based on a signal characteristic of the detected target reference signal.

It should be noted that the target codebook is used to adjust a beam of a signal received by the signal adjustment apparatus to a beam corresponding to the target codebook. In other words, when the target reference signal from the transmitting apparatus is received, the target codebook is used to adjust the target reference signal to obtain a target beam corresponding to the target codebook, such that the target reference signal is sent to the receiving apparatus by using the target beam corresponding to the target codebook.

It should be noted that the signal characteristic of the target reference signal includes a phase of a main lobe of the target reference signal detected by the receiving apparatus.

It should be noted that the transmitting apparatus in this embodiment may be, but is not limited to, the terminal device 130 in the embodiment shown in FIG. 1, and the receiving apparatus in this embodiment may be but is not limited to

the base station 110 in the embodiment shown in FIG. 1. Accordingly, for the base station, the target reference signal is an uplink target reference signal. Alternatively, those having ordinary skill in the art can select and set a corresponding transmitting apparatus or receiving apparatus according to an actual application scenario, which is not limited by this embodiment. In order to more conveniently describe the application scenario and principles of the present disclosure, the following related embodiments are described with a terminal device as the transmitting apparatus and a base station as the receiving apparatus, but it should not be construed as a limitation to the embodiment of the present disclosure.

In this step, as the target reference signal from the terminal device is received at the step S110, the target reference signal can be sent to the base station using the target codebook at the step S120, such that the base station can determine a position of the terminal device relative to the signal adjustment apparatus according to the signal characteristic of the target reference signal. In other words, through the target codebook, the target reference signal can be accurately sent to the base station in a form of a beam corresponding to the target codebook, thereby facilitating subsequent position measurement by the base station. Different from the related technology, the base station can perform position measurement using the signal characteristic of the detected target reference signal, instead of performing position measurement based on distance or time-delay. This reduces harsh requirements on time-delay, an amplitude of an RF device, etc., and optimizes the measurement mode and reduces measurement costs. Therefore, the embodiments of the present disclosure can simply and effectively realize the position measurement of a target while reducing the measurement costs, and further determine, based on a measured position signal of the target, far-field and near-field characteristics of the target relative to the signal adjustment apparatus, so as to carry out the overall communication design more accurately, thereby filling the technical gaps of the existing measurement method.

It should be noted that the signal adjustment apparatus in this embodiment has a plurality of first codebooks, and the target codebook is one of the plurality of first codebooks. The signal adjustment apparatus may select one of the plurality of first codebooks as the target codebook for sending the target reference signal to the base station. A specific selection method and principle will be described in the following embodiment and will not be described in detail herein.

An embodiment of the present disclosure may also include, but is not limited to, a following step S130.

At the step S130, codebook indication information is received.

In a possible implementation, the codebook indication information includes at least one of the following information:

a codebook index;
beam spacing between adjacent target beams, where the target beams are a plurality of beams corresponding to the plurality of first codebooks;
the number of the target beams; or
measurement orientation indication information.

In this step, the codebook indication information is received such that one of the plurality of first codebooks is selected as the target codebook based on the codebook indication information in a subsequent step.

It should be noted that the plurality of first codebooks may also include but are not limited to a pair of identical first codebooks for Doppler compensation, which is used for indicating whether to perform Doppler compensation. For example, a 1-bit signaling indication may be used to indicate that one codebook is duplicated in a codebook corresponding to a target beam indicated by the codebook indication information to the signal adjustment apparatus, and the codebook is used to assist in Doppler compensation. The required minimum number of target beams needs to be increased by 1 when the information is enabled. In another possible implementation, it may be by default that the last codebook and the strongest codebook of the target beam are identical, or by default that the last codebook is a middle codebook of the target beam. Then this information may exist by default, and Doppler compensation is not performed by default.

It should be noted that a codebook index $B_{id}$ is used as a reference codebook index, so that the rest of codebook indexes can be determined correspondingly based on other information in the codebook indication information, so as to obtain all codebook indexes, and corresponding beams may be initial target beams or central target beams of a plurality of indicated target beams, etc. It is possible to distinguish between target beams corresponding to the first codebooks by indexing the plurality of first codebooks. Since the target beams corresponding to the first codebooks each can be used to send a corresponding target reference signal, target reference signals can be sent through the target beams corresponding to the first codebooks for performing position measurement in a subsequent step.

It should be noted that because orientation dimensions of different target beams may be different, for example, the dimensions may be azimuth dimension, elevation dimension, and two dimensions including azimuth dimension and elevation dimension, the number of target beams may also change with the change of orientation dimension, which needs to be indicated in specific application scenarios.

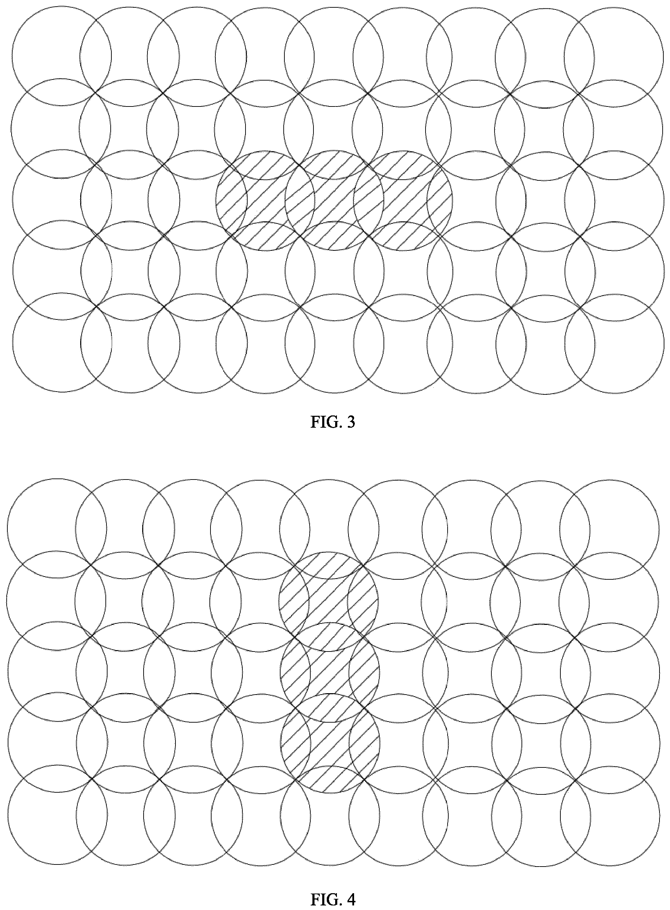

For example, as shown in FIG. 3, when the plurality of first codebooks in the azimuth dimension are indicated, the plurality of first codebooks are arranged in an approximate "-" shape in space, that is, a portion with hatched lines shown in the middle of FIG. 3. In this case, weights of the plurality of first codebooks in the elevation dimension are identical, but weights in the azimuth dimension are different. The plurality of first codebooks may be set to have identical spatial frequency interval in the azimuth dimension. When Doppler compensation is not indicated, the number of codebooks is at least 3. When Doppler compensation is indicated, the number of codebooks is at least 4, where one codebook (which may be the middle codebook by default) appears twice.

As shown in FIG. 4, when the plurality of first codebooks in the elevation dimension are indicated, the plurality of first codebooks are arranged in an approximate "I" shape in space, that is, a portion with hatched lines shown in the middle of FIG. 4. In this case, weights of the plurality of first codebooks in the azimuth dimension are the same, but weights in the elevation dimension are different. The plurality of first codebooks may be set to have identical spatial frequency interval in the elevation dimension. When Doppler compensation is not indicated, the number of codebooks is at least 3. When Doppler compensation is indicated, the number of codebooks is at least 4, where one codebook (which may be the middle codebook by default) appears twice.

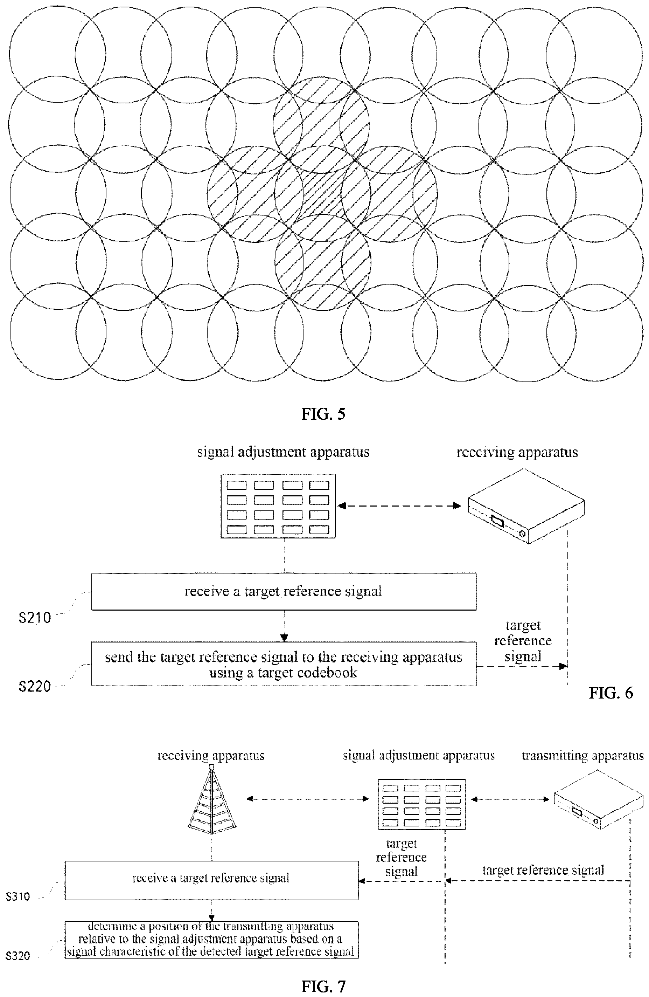

As shown in FIG. 5, when the plurality of first codebooks indicate two dimensions including the azimuth dimension and the elevation dimension, the plurality of first codebooks are arranged in an approximate "+" shape in space, that is, a portion with hatched lines shown in the middle of FIG. 5. In this case, the plurality of first codebooks are divided into two parts, one part of first codebooks have identical weight in the azimuth dimension and the other part of first codebooks have identical weight in the elevation dimension. Two adjacent codebooks in space may be set with identical spatial frequency interval in the azimuth dimension or the elevation dimension. When Doppler compensation is not indicated, the number of codebooks is at least 5. When Doppler compensation is indicated, the number of codebooks is at least 6, where one codebook (which may be the middle codebook by default) appears twice.

It should be noted that the azimuth dimension, the elevation dimension, and the two dimensions including the azimuth dimension and the elevation dimension in the above embodiments are only examples for describing the principle of the orientation dimension of the target beam, and are not presented as limitation. In a specific application scenario, other orientation dimensions of the target beam can be defined or searched for indication. For example, the azimuth dimension experiences spatial angle adjustment to obtain another dimension relative to the azimuth dimension. Alternatively, the elevation dimension experiences spatial angle adjustment to obtain another dimension relative to the elevation dimension. Alternatively, the two dimensions including the azimuth dimension and the elevation dimension experience spatial angle adjustment to obtain another dimension relative to the two dimensions including the azimuth dimension and the elevation dimension.

It should be noted that the measurement orientation indication information indicates a specific orientation of measurement using the target beam in a subsequent step, for example, it can be measurement orientation indication information that indicates only measurement in the azimuth dimension, or it can be measurement orientation indication information that indicates only measurement in the elevation dimension, or it can be measurement orientation indication information that indicates measurement in two dimensions including the azimuth dimension and the elevation dimension at the same time. The number of target beams indicating the corresponding dimension may be selected according to the specific indicated dimension. In other words, the number of target beams may be the number of target beams of the individual azimuth dimension, the number of target beams of the individual elevation dimension, or a sum of the number of target beams corresponding to the azimuth dimension and the number of target beams corresponding to the elevation dimension. If only one dimension of target beams are indicated, the number of target beams may be the number of target beams in the azimuth dimension, the number of target beams in the elevation dimension or the number of beams shared in the azimuth dimension and the elevation dimension. For example, as shown in FIGS. 3-5, the minimum number of target beams in a single dimension is 3, and the minimum number of target beams in two dimensions is 5 (that is, at least 3 beams in the azimuth dimension, at least 3 beams in the elevation dimension, and one beam is shared in these two dimensions). If two dimensions of target beams are indicated, a codebook index $B_{id}$ indicated in the above parameter may be set to a codebook index corresponding to the target beam shared in the azimuth dimension and the elevation dimension. The information may be omitted. In this case, the number of one-dimensional beams may be 3, 4, etc. by default, the number of two-dimensional beams may be 5, 6, etc. by default, and so on. For example, the information may be indicated by 1-bit or 2-bit signaling. When the information is omitted, measurement in the azimuth dimension or measurement in two dimensions may be performed by default.

It should be noted that the beam spacing between adjacent target beams may vary for target beams in different dimensions. For example, beam spacing between target beams corresponding to different codebooks may be a separate azimuth-dimension beam spacing (which is denoted as $O_1$, and $O_1=1$ when the beam spacing is beam spacing corresponding to orthogonal beams), or may be a separate elevation-dimension beam spacing (which is denoted as $O_2$, and $O_2=1$ when the beam spacing is beam spacing corresponding to orthogonal beams), or may be beam spacing of azimuth dimension and elevation dimension (respectively denoted as $O_1$ and $O_2$). If only one beam spacing is indicated, the beam spacing may be the azimuth-dimension beam spacing ($O_1$), or the beam spacing ($O_1$ and $O_2$) shared by the azimuth dimension and the elevation dimension. In addition, the information may be omitted. The beam spacing is a beam spacing between orthogonal beams by default, that is, $O_1=1$, $O_2=1$ or other corresponding values, for example, $Oi=2$ and $O_2=2$, which indicate that spacing between two adjacent target beams is half of the beam spacing corresponding to orthogonal beams.

Taking two-dimensional measurement as an example, the following conclusions can be obtained by the signal adjustment apparatus through information in the codebook indication information. The reference codebook index $B_{id}$ is indicated. The beam spacing between adjacent target beams is the beam spacing corresponding to orthogonal beams ($O_i=1$, $O_2=1$) to indicate the target beam. In other words, the number of codebooks corresponding to the target beams is 5, indicating that the base station transmits 5 codebooks to the signal adjustment apparatus, where corresponding codebook indexes are $B_{id}$, orthogonal left beam (azimuth dimension) of $B_{id}$, orthogonal right beam (azimuth dimension) of $B_{id}$, orthogonal upper beam (elevation dimension) of $B_{id}$, and orthogonal lower beam (elevation dimension) of $B_{id}$ respectively. The beam spacing of the target beam corresponding to each codebook is the spacing corresponding to the orthogonal beams.

In an embodiment of the present disclosure, the step S110 is further described. The step S 110 may include but is not limited to a step S111.

At the step S111, the target reference signal from the transmitting apparatus is received in a target slot.

In this step, the terminal device sends the target reference signal in its corresponding target slot, that is, a signal in the target slot is the target reference signal. In this way, the target reference signal from the terminal device can be accurately received in the target slot, so that incorrect reception of the target reference signal is avoided, and a step of position measurement can be normally executed correspondingly in the subsequent step.

It should be noted that a specific form of the target slot may have different implementations, which are not specifically limited herein. For example, the slot may be a slot measured in hours, a slot measured in minutes, or a slot measured in days, weeks, etc. That is to say, for different application scenarios or different terminal devices and signal adjustment apparatuses, the specific form of the target slot can be set accordingly, and is not specifically limited herein.

In an embodiment of the present disclosure, the step S120 is further described. The step S120 may include but is not limited to a step S121.

At the step S121, the target reference signal is sent to the receiving apparatus using one of the plurality of first codebooks as the target codebook.

In this step, one of the plurality of first codebooks is selected as the target codebook, and the target reference signal is transmitted to the base station using the target codebook selected from the plurality of first codebooks, such that the base station can determine a position of the transmitting apparatus relative to the signal adjustment apparatus according to the signal characteristic of the target reference signal.

It should be noted that in an interval in which the target codebook is effective, the signal adjustment apparatus can use the target codebook to send the target reference signal to the base station, that is, when the target reference signal leaves the signal adjustment apparatus, the target codebook no longer has an effect on the target reference signal. Therefore, other signals will not be mistakenly sent to the base station through the corresponding target beam, thereby ensuring the accuracy of sending the target reference signal.

It should be noted that the signal adjustment apparatus senses the timing of the transmission of the target reference signal to or from the signal adjustment apparatus, which may have different implementations, and is not specifically limited herein. For example, a signal sensing structure is preset on the signal adjustment apparatus. The signal sensing structure is configured to sense whether the target reference signal exists in the signal adjustment apparatus, so as to determine the timing of the transmission of the target reference signal to or from the signal adjustment apparatus. In another example, an operator monitors a traffic condition of the signal adjustment apparatus in real time, and determines the timing of the transmission of the target reference signal to or from the signal adjustment apparatus based on the traffic condition of the signal adjustment apparatus.

An embodiment of the present disclosure may also include but is not limited to a step S140.

At the step S140, signal indication information is received.

It should be noted that the signal indication information is used to instruct the terminal device to send the target reference signal in the target slot.

In this step, because the signal indication information can instruct the terminal device to send the target reference signal in the target slot, a sending slot of the target reference signal can be learned by receiving the signal indication information. Therefore, the target reference signal can be accurately received in the target slot.

In some embodiments, the signal indication information may also be used to instruct the terminal device to send the target reference signal through other air interface resources other than the target slot, for example, an OFDM symbol.

It should be noted that as the signal adjustment apparatus may be connected with a plurality of communication devices (for example, a plurality of terminal devices), the signal adjustment apparatus can receive a plurality of signals simultaneously. In order to prevent mismatch in signal identification, the signal adjustment apparatus can determine, according to the signal indication information, that the target reference signal sent by the terminal device is received, thereby greatly improving the accuracy of sending the target reference signal. For example, the base station configures uplink target reference signals which correspond to 5 codebooks. The target reference signals are distributed on 5 OFDM symbols, each of which corresponds to one target reference signal. In this way, the base station may send slots and OFDM symbol distribution of the uplink target reference signals to the signal adjustment apparatus as the signal indication information, such that when receiving the signal from the terminal device, the signal adjustment apparatus can identify the signal as the target reference signal according to the slots and OFDM symbol distribution of the uplink target reference signals.

It should be noted that, regardless of the number of target beams, the signal adjustment apparatus can correspondingly execute the above step S120 for each target beam. In other words, the signal adjustment apparatus can accurately send the target reference signal to the base station using the target codebook so as to facilitate subsequent measurement by the base station.

It should be noted that the reception of the codebook indication information and the signal indication information may have different implementations, which is not specifically limited herein. For example, the codebook indication information and/or the signal indication information may be received upon detection of the codebook indication information and/or the signal indication information sent by the base station. For another example, the reception of the codebook indication information and/or the signal indication information may be pre-negotiated prior to the execution of the step S110, so that the codebook indication information and/or the signal indication information can be received from the base station when a preset condition is satisfied, for example, a specified time point or the like is reached.

It should be noted that there are a variety of sources of the codebook indication information and/or the signal indication information, for example, the information is sent from the base station or a preset information sending device, etc. When the source is the base station, the information may be instantaneous information periodically transmitted by the base station during a peak period of network traffic, mean information transmitted by the base station during a peak period of network traffic in a preset time period, and other types of information, which is not specifically limited herein.

It should be noted that the base station in this embodiment determines the position of the terminal device relative to the signal adjustment apparatus according to the signal characteristic of the target reference signal. Relevant descriptions of the signal characteristic of the target reference signal will be given in subsequent embodiments, and will not be described herein.

It should be noted that an indication of the target reference signal may also be sent to the terminal device such that the terminal device sends a corresponding target reference signal according to the indication, which may be set according to a specific scenario. For example, it is preset that the base station or another similar signal sending apparatus, etc. sends the indication. Taking the base station as an example, the base station configures uplink reference signal indication information for the terminal device. The uplink reference signal indication information is sent from the base station to the terminal device, so that the terminal device sends the target reference signal to the signal adjustment apparatus according to the information.

In an embodiment of the present disclosure, the step S120 is further described in the case that the signal adjustment apparatus is a RIS having at least one array element. The step S120 may include, but is not limited to, a step S122.

At the step S122, the at least one array element is adjusted according to the target codebook, such that the RIS sends the target reference signal to the receiving apparatus using a target beam corresponding to the target codebook.

In this step, since the RIS may be a passive device, the RIS adjusts at least one array element according to the target codebook, such that the RIS can determine the target beam corresponding to the target codebook, and the RIS sends the target reference signal to the base station through the target beam.

It should be noted that the RIS may adjust the array element in various different ways, which are not specifically limited herein. For example, it is found, through analysis, that a matching difference between the characteristic of the target beam and the current RIS lies in a phase value, and the phase value of an electromagnetic unit (for example, a varactor diode, a PIN switch, a MEMS switch, liquid crystal, or graphene) of the RIS may be adjusted accordingly, such that the RIS can send the target reference signal to the base station through the target beam. Similarly, if it is found, through analysis, that the matching difference between the characteristic of the target beam and the current RIS lies in an angle value, an amplitude value, etc., similar adjustment processing can be performed on the electromagnetic unit of RIS, which will not be described in detail herein.

In addition to the case that the signal adjustment apparatus is RIS, when the signal adjustment apparatus is a repeater, since the repeater forwarding signals can also generate a target beam corresponding to the target codebook according to the target codebook, the repeater uses the target beam to send the target reference signal to the base station, such that the base station receives the target reference signal and determines the position of the terminal device relative to the signal adjustment apparatus according to the target reference signal, thereby improving the accuracy of measuring the position of the terminal device.

It should be noted that the generation of a corresponding target beam according to the target codebook may have different implementations, which is not specifically limited herein. For example, when the operator or the repeater itself inputs the target codebook, the repeater may directly generate the target beam according to the target codebook. For another example, the repeater may pre-store program code or an application flow for generating a target beam according to the target codebook. When the repeater is started or a signal receiving function of the repeater is triggered, that is to say, it is detected that the repeater has selected to obtain the target codebook, the repeater reads the pre-stored program code or the application flow to generate the target beam.

FIG. 6 is a flowchart of a position measurement method provided by another embodiment of the present disclosure. The position measurement method may be performed by a signal adjustment apparatus, for example, the signal adjustment apparatus 120 in the embodiment shown in FIG. 1. The position measurement method may include, but is not limited to, follow steps S210 and S220.

At the step S210, a target reference signal is received.

It should be noted that a source of the target reference signal is not limited and may be selected according to a specific application scenario. For example, the transmitting apparatus may send the target reference signal to the signal adjustment apparatus, that is, the signal adjustment apparatus receives the target reference signal from the transmitting apparatus.

It should be noted that both steps S210 and S110 are both performed by the signal adjustment apparatus, which have identical technical concept and can be regarded as essentially equivalent technical contents. Therefore, specific implementation and working principle of the step S210 are similar to those of S 110. Since the specific implementation and working principle of the step S110 have been described in detail above, the specific implementation and working principle of the step S210 can be learned by referring to those of the step S110. Details are not repeated herein for avoiding redundancy.

In an embodiment of the present disclosure, step S210 is further described. The step S210 may include, but is not limited to, a step S211.

At the step S211, the target reference signal is received in a target slot.

In this step, since a signal sent in the target slot is the target reference signal, the target reference signal can be accurately received in the target slot. Therefore, incorrect reception of the target reference signal is avoided, and a step of position measurement can be normally executed correspondingly in the subsequent step.

It should be noted that a specific form of the target slot may have different implementations, which is not specifically limited herein. For example, the slot may be a slot measured in hours, a slot measured in minutes, or a slot measured in days, weeks, etc. That is to say, for different application scenarios or different terminal devices and signal adjustment apparatuses, the specific form of the target slot can be set accordingly, and is not specifically limited herein.

At the step S220, the target reference signal is sent to a receiving apparatus using a target codebook.

It should be noted that the target codebook is used to adjust a beam of a signal received by the signal adjustment apparatus to a beam corresponding to the target codebook, and a signal characteristic of the target reference signal is used to determine a position of the receiving apparatus relative to the signal adjustment apparatus.

It should be noted that the signal characteristic of the target reference signal includes a phase of a main lobe of the target reference signal detected by the receiving apparatus.

It should be noted that the receiving apparatus in this embodiment may be, but is not limited to, the terminal device 130 in the embodiment shown in FIG. 1. Accordingly, for the terminal device, the target reference signal is an uplink target reference signal. Alternatively, those having ordinary skill in the art can select and set a corresponding receiving apparatus according to an actual application scenario, which is not limited by this embodiment. In order to more conveniently describe the application scenario and principles of the present disclosure, the following related embodiments are described with a terminal device as the receiving apparatus, but it should not be construed as a limitation to the embodiment of the present disclosure.

In this step, as the target reference signal is received at the step S210, the target reference signal can be sent to the terminal device using the target codebook at the step S220, such that a position of the terminal device relative to the signal adjustment apparatus can be determined according to the signal characteristic of the target reference signal. In other words, through the target codebook, the target reference signal can be accurately sent to the terminal device in a form of a beam corresponding to the target codebook, which facilitates subsequent position measurement. Different from the related technology, position measurement can be performed using the signal characteristic of the detected target reference signal, instead of performing position measurement based on distance or time-delay. This reduces harsh requirements on time-delay, an amplitude of an RF device, etc., and optimizes the measurement mode and reduces measurement costs. Therefore, the embodiments of the present disclosure can simply and effectively realize the position measurement of a target while reducing the measurement costs, and further determine, based on a measured position signal of the target, far-field and near-field characteristics of the target relative to the signal adjustment apparatus, so as to carry out the overall communication design more accurately, thereby filling the technical gaps of the existing measurement method.

It should be noted that the signal adjustment apparatus in this embodiment has a plurality of first codebooks, and the target codebook is one of the plurality of first codebooks. The signal adjustment apparatus may select one of the plurality of first codebooks as the target codebook for sending the target reference signal to the terminal device.

An embodiment of the present disclosure may also include, but is not limited to, a step S230.

At the step S230, codebook indication information is received.

In a possible implementation, the codebook indication information includes at least one of the following information:

a codebook index;
beam spacing between adjacent target beams, where the target beams are a plurality of beams corresponding to the plurality of first codebooks;
the number of the target beams; or
measurement orientation indication information.

In this step, the codebook indication information is received such that one of the plurality of first codebooks is selected as the target codebook based on the codebook indication information in a subsequent step.

It should be noted that in different application scenarios, the composition of the plurality of first codebooks can be different. For example, weights of the plurality of first codebooks in the elevation dimension are identical, or weights of the plurality of first codebooks in the azimuth dimension are identical. For another example, the plurality of first codebooks include two parts of first codebooks, where weights of a first part of first codebooks in the azimuth dimension are identical, and weights of a second part of first codebooks in the elevation dimension are identical. For another example, the plurality of first codebooks include a pair of identical first codebooks for Doppler compensation.

It should be noted that both steps S230 and S130 are both performed by the signal adjustment apparatus, which have identical technical concept and can be regarded as essentially equivalent technical contents. Therefore, specific implementation and working principle of the step S230 are similar to those of the step S130, that is, specific implementations of the codebook indication information, the target beam, the plurality of first codebooks, and the measurement orientation indication information, etc. in the step S230 are similar to those of the step S130. Since the specific implementation and working principle of the step S130 have been described in detail above, the specific implementation and working principle of the step S230 can be learned by referring to those of the step S130. Details are not repeated herein for avoiding redundancy.

In an embodiment of the present disclosure, the step S220 is further described. The step S220 may include, but is not limited to, a step S221.

At the step S221, the target reference signal is sent to the receiving apparatus using one of the plurality of first codebooks as the target codebook.

In this step, one of the plurality of first codebooks is used as the target codebook, and the target reference signal is transmitted to the terminal device using the target codebook selected from the plurality of first codebooks.

It should be noted that in an interval in which the target codebook is effective, the signal adjustment apparatus can use the target codebook to send the target reference signal to the terminal device, that is, when the target reference signal leaves the signal adjustment apparatus, the target codebook no longer has an effect on the target reference signal. Therefore, other signals will not be mistakenly sent to the terminal device through the corresponding target beam, thereby ensuring the accuracy of sending the target reference signal.

An embodiment of the present disclosure may also include, but is not limited to, a step S240.

At the step S240, signal indication information is received.

It should be noted that the signal indication information is used to instruct the transmitting apparatus to send the target reference signal in the target slot. It should be noted that the transmitting apparatus in this embodiment may be, but is not limited to, the base station 110 in the embodiment shown in FIG. 1. Accordingly, for the base station, the target reference signal is a downlink target reference signal. Alternatively, those having ordinary skill in the art can select and set a corresponding transmitting apparatus according to an actual application scenario, which is not limited by this embodiment. In order to more conveniently describe the application scenario and principles of the present disclosure, the following related embodiments are described with a base station as the transmitting apparatus, but it should not be construed as a limitation to the embodiment of the present disclosure.

In some embodiments, the signal indication information may also be used to instruct the base station to send the target reference signal through other air interface resources other than the target slot, for example, an OFDM symbol.

In this step, because the signal indication information can instruct the base station to send the target reference signal in the target slot, a sending slot of the target reference signal can be learned by receiving the signal indication information, so that the target reference signal sent by the base station can be accurately received in the target slot.

It should be noted that as the signal adjustment apparatus may be connected with a plurality of communication devices, the signal adjustment apparatus can receive a plurality of signals simultaneously. In order to prevent mismatch in signal identification, the signal adjustment apparatus can determine, according to the signal indication information, that the target reference signal sent by the base station is received thereby greatly improving the accuracy of sending the target reference signal. For example, the base station configures downlink target reference signals which correspond to 5 codebooks. The target reference signals are distributed on 5 OFDM symbols, each of which corresponds to one target reference signal. In this way, the base station may send slots and OFDM symbol distribution of the uplink target reference signals to the signal adjustment apparatus as the signal indication information, such that the signal adjustment apparatus can identify the signal as the target reference signal according to the slots and OFDM symbol distribution of the uplink target reference signals.

It should be noted that the position of the terminal device relative to the signal adjustment apparatus is determined by using the signal characteristic of the target reference signal. Relevant descriptions of the signal characteristic of the target reference signal will be given in subsequent embodiments, and will not be described herein.

It should be noted that an indication of the target reference signal may also be sent to the terminal device such that the terminal device determines the target reference signal according to the indication, which may be set according to a specific scenario. For example, it is preset that the base station or another similar signal sending apparatus, etc. sends the indication. Taking the base station as an example, the base station configures downlink reference signal indication information for the terminal device. The downlink reference signal indication information is sent from the base station to the terminal device, such that the terminal device identifies, according to the information, the received signal sent by the signal adjustment apparatus as the target reference signal.

In an embodiment of the present disclosure, the step S220 is further described in the case that the signal adjustment apparatus is a RIS having at least one array element. The step S220 may include but is not limited to a step S222.

At the step S222, the at least one array element is adjusted according to the target codebook, such that the RIS sends the target reference signal to the receiving apparatus using a target beam corresponding to the target codebook.

In this step, since the RIS may be a passive device, the RIS adjusts at least one array element according to the target codebook, such that the RIS can determine the target beam corresponding to the target codebook, and the RIS sends the target reference signal to the terminal device through the target beam.

It should be noted that the RIS may adjust the array element in various ways, which are not specifically limited herein. For example, it is found, through analysis, that a matching difference between the characteristic of the target beam and the current RIS lies in a phase value, and the phase value of an electromagnetic unit (for example, a varactor diode, a PIN switch, a MEMS switch, liquid crystal, or graphene) of the RIS may be adjusted accordingly, such that the RIS can send the target reference signal to the terminal device through the target beam. Similarly, if it is found, through analysis, that the matching difference between the characteristic of the target beam and the current RIS lies in an angle value, an amplitude value, etc., similar adjustment processing can be performed on the electromagnetic unit of RIS, which will not be described in detail herein.

In addition to the case that the signal adjustment apparatus is RIS, when the signal adjustment apparatus is a repeater, since the repeater forwarding signals can also generate a target beam corresponding to the target codebook according to the target codebook. Then, the repeater uses the target beam to send the target reference signal to the terminal device, such that the terminal device receives the target reference signal.

FIG. 7 is a flowchart of a position measurement method provided by another embodiment of the present disclosure. The position measurement method may be performed by a receiving apparatus, for example, the base station 110 in the embodiment shown in FIG. 1. The power measurement method can be applied to a scenario in which a base station is in a normal working state and network traffic is in peak periods. The position measurement method may include, but is not limited to, following steps S310 and S320.

At the step S310, a target reference signal is received.

It should be noted that the target reference signal is received by a signal adjustment apparatus from a transmitting apparatus and sent to the receiving apparatus using a target codebook, where the target codebook is used by the signal adjustment apparatus to adjust a beam of a received signal to a beam corresponding to the target codebook.

In this step, by receiving the target reference signal that is received by the signal adjustment apparatus from the transmitting apparatus and sent using the target codebook, a position of the transmitting apparatus relative to the signal adjustment apparatus is determined according to a signal characteristic of the target reference signal in a subsequent step.

It should be noted that the transmitting apparatus in this embodiment may be, but is not limited to, the terminal device 130 in the embodiment shown in FIG. 1, and the receiving apparatus in this embodiment may be but is not limited to the base station 110 in the embodiment shown in FIG. 1. Accordingly, for the base station, the target reference signal is an uplink target reference signal. Alternatively, those having ordinary skill in the art can select and set a corresponding transmitting apparatus or receiving apparatus according to an actual application scenario, which is not limited by this embodiment. In order to more conveniently describe the application scenario and principles of the present disclosure, the following related embodiments are described with a terminal device as the transmitting apparatus and a base station as the receiving apparatus, but it should not be construed as a limitation to the embodiment of the present disclosure.

It should be noted that both steps S310 and S 110 have identical technical concept with the difference only in execution bodies, and can be regarded as essentially equivalent technical contents. Therefore, specific implementation and working principle of the step S310 are similar to those of the step S110. Since the specific implementation and working principle of the step S110 have been described in detail above, the specific implementation and working principle of the step S310 can be learned by referring to those of the step S110. Details are not repeated herein for avoiding redundancy.

At the step S320, a position of the transmitting apparatus relative to the signal adjustment apparatus is determined according to a signal characteristic of the detected target reference signal.

It should be noted that the signal characteristic of the target reference signal includes a phase of a main lobe of the target reference signal detected by the receiving apparatus.

In this step, since the target reference signal is received at the step S310, position measurement can be performed using the signal characteristic of the detected target reference signal at the step S320, instead of performing position measurement based on distance or time-delay. This reduces harsh requirements on time-delay, an amplitude of an RF device, etc., and optimizes the measurement mode and reduces measurement costs. Therefore, the embodiments of the present disclosure can simply and effectively realize the position measurement of a target while reducing the measurement costs, and further determine, based on a measured position signal of the target, far-field and near-field characteristics of the target relative to the signal adjustment apparatus, so as to carry out the overall communication design more accurately, thereby filling the technical gaps of the existing measurement method.

An embodiment of the present disclosure may also include, but is not limited to, a step S330.

At the step S330, codebook indication information is sent to the signal adjustment apparatus.

In a possible implementation, the codebook indication information includes at least one of the following information:

> a codebook index;
> beam spacing between adjacent target beams, where the target beams are a plurality of beams corresponding to the plurality of first codebooks;
> the number of the target beams; or
> measurement orientation indication information.

In this step, the codebook indication information is sent to the signal adjustment apparatus, so that in the following step, the signal adjustment apparatus selects one of the plurality of first codebooks as the target codebook based on the codebook indication information, and then sends the target reference signal to the base station using the target codebook selected from the plurality of first codebooks.

It should be noted that in different application scenarios, the composition of the plurality of first codebooks can be different. For example, weights of the plurality of first codebooks in the elevation dimension are identical, or weights of the plurality of first codebooks in the azimuth dimension are identical. For another example, the plurality of first codebooks include two parts of first codebooks, where weights of a first part of first codebooks in the azimuth dimension are identical, and weights of a second part of first codebooks in the elevation dimension are identical. For another example, the plurality of first codebooks include a pair of identical first codebooks for Doppler compensation.

It should be noted that since the codebook indication information, the target beam, the plurality of first codebooks and the measurement orientation indication information, etc. have been described in detail in the foregoing embodiment, details will not be repeated herein for avoiding redundancy.

An embodiment of the present disclosure may also include, but is not limited to, a step S340.

At the step S340, signal indication information is sent to the signal adjustment apparatus.

It should be noted that the signal indication information is used to instruct the transmitting apparatus to send the target reference signal in a target slot.

In some embodiments, the signal indication information may also be used to instruct the terminal device to send the target reference signal through other air interface resources other than the target slot, for example, an OFDM symbol.

In this step, because the signal indication information can instruct the terminal device to send the target reference signal in the target slot, the signal adjustment apparatus can learn a sending slot of the target reference signal according to the signal indication information sent to the signal adjustment apparatus, and thus accurately receives the target reference signal sent by the terminal device in the target slot.

It should be noted that as the signal adjustment apparatus may be connected with a plurality of communication devices, the signal adjustment apparatus can receive a plurality of signals simultaneously. In order to prevent mismatch in signal identification, the signal adjustment apparatus can determine, according to the signal indication information, that the target reference signal sent by the terminal device is received, thereby greatly improving the accuracy of receiving the target reference signal.

It should be noted that the base station may further send an indication of the target reference signal to the terminal device such that the terminal device determines the target reference signal according to the indication, which may be set according to a specific scenario. For example, it is preset that the base station or another similar signal sending apparatus, etc. sends the indication. Taking the base station as an example, the base station configures downlink reference signal indication information for the terminal device. The downlink reference signal indication information is sent from the base station to the terminal device, such that the terminal device identifies, according to the indication information, the received signal sent by the signal adjustment apparatus as the target reference signal.

It should be noted that information interaction between the base station, the terminal device and the signal adjustment apparatus can be set according to an actual scenario, which is not limited herein. For example, the base station may roughly estimate a relative distance between the terminal device and the base station or a relative distance between the terminal device and the signal adjustment apparatus according to historical stored data, and then send corresponding information to the terminal device or the signal adjustment apparatus based on the estimated relative distance.

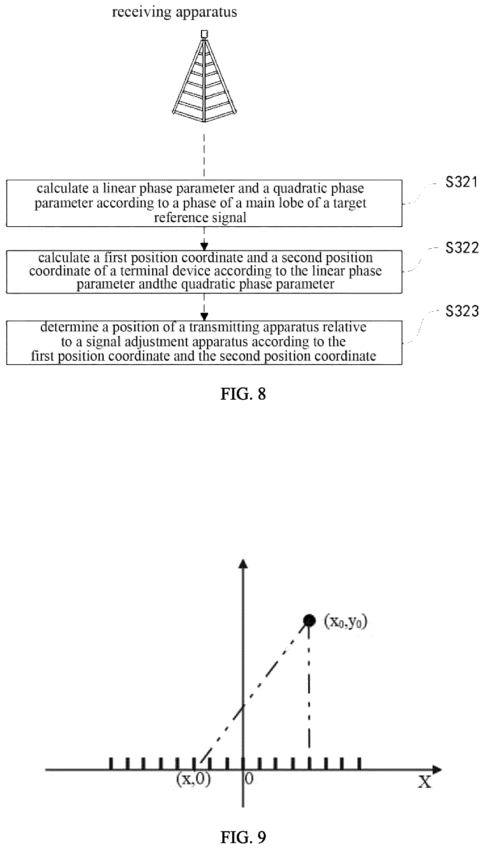

With reference to FIG. 8, the step S320 is further described in an embodiment of the present disclosure. The step S320 may include, but is not limited to, following steps S321 to S323.

At the step S321, a linear phase parameter and a quadratic phase parameter are calculated according to the phase of the main lobe of the target reference signal.

In this step, since the phase of the main lobe of the target reference signal can be approximated to a quadratic phase in space, the linear phase parameter and the quadratic phase parameter with high accuracy can be calculated according to the phase of the main lobe of the target reference signal. Then, position coordinates of the terminal device can be calculated based on the obtained linear phase parameter and quadratic phase parameter in a subsequent step, and a position of the terminal device relative to the signal adjustment apparatus can be determined according to the position coordinates of the terminal device.

It should be noted that there can be many specific ways to calculate the linear phase parameter and the quadratic phase parameter according to the target reference signal, which are not limited herein. A specific implementation is given below to explain the principle and flow of the implementation. For those having ordinary skill in the art, adaptive adjustment made according to the implementation in specific scenarios also belongs to the protection scope of the implementation.

Since a plurality of beams of a target or terminal device relative to the signal adjustment apparatus under a near field condition can be a linear frequency modulation signal, and parameters of the formed linear frequency modulation signal vary with different positions of the target and terminal device, a position of the target or terminal device relative to the signal adjustment apparatus under the near field condition can be determined based on this.

Referring to FIG. 9, the signal adjustment apparatus is RIS. An array element of the RIS is distributed on the X axis with array element coordinates being $(x, 0)$, and coordinates of the terminal device are $(x_0, y_0)$. A distance $R(x)$ between the array element $(x, 0)$ and the terminal device $(x_0, y_0)$ can be simply calculated by the following formula (1):

$$R(x) = \sqrt{y_0^2 + (x - x_0)^2}$$
$$= y_0 \sqrt{1 + \frac{(x - x_0)^2}{y_0^2}} \qquad (1)$$
$$\approx y_0 + \frac{(x - x_0)^2}{2y_0}$$

On the basis of formula (1), a pattern of the array element is simplified or ignored, then a signal received by the array element $(x, 0)$ can be calculated by the following formula (2):

$$r(x) = \exp(-j2\pi R(x)/\lambda)$$
$$\approx \exp\left(-\frac{j2\pi y_0}{\lambda} - \frac{j\pi(x - x_0)^2}{\lambda y_0}\right) \qquad (2)$$

In formula (2), $\lambda$ is a wavelength of a carrier signal.

According to formula (2), the signal received by the array element on the X axis is a linear frequency modulation signal related to $x$, and different beam directions are equivalent to spatial Fourier transform related to $x$. Using the principle of stationary phase to solve the spatial Fourier transform of formula (2), the following formula (3) is set:

$$\phi(x, \omega) = -\frac{2\pi y_0}{\lambda} - \frac{\pi(x - x_0)^2}{\lambda y_0} - \omega x \qquad (3)$$

The following formula (4) can be obtained when $\phi'(x, \omega)|_{x=x1} = 0$ is specified:

$$x_1 = x_0 - \frac{\omega \lambda y_0}{2\pi} \qquad (4)$$

Then, with reference to formula (2), formula (3) and formula (4) shown above, the spatial Fourier transform of formula (2) can be expressed as formula (5) below.

$$
\begin{aligned}
r_{beam}(\omega) &\approx \sqrt{\frac{-\pi}{2\phi''(x_1,\omega)}} \cdot \exp(-j\pi/4) \cdot \exp(j\phi(x_1,\omega)) \\
&= \sqrt{\frac{-\pi}{2\phi''(x_1,\omega)}} \cdot \exp(-j\pi/4) \cdot \exp\left(-\frac{2\pi y_0}{\lambda} - \frac{j\pi(x_1-x_0)^2}{\lambda y_0} - j\omega x_1\right) \quad (5) \\
&= A \cdot \exp\left(\frac{j\omega^2 \lambda y_0}{4\pi} - j\omega x_0\right)
\end{aligned}
$$

In Formula (5), a spatial angle between the terminal device and the signal adjustment apparatus is defined as $\varphi$, and a relationship between $\omega$ and $\varphi$ can be calculated by the following formula (6):

$$\omega = 2\pi \sin\varphi / \lambda \qquad (6)$$

With reference to formula (5) and formula (6), a formula (7) with respect to the received signal, the spatial angle between the terminal device and the signal adjustment apparatus can be obtained.

$$r_{beam}(\varphi) \approx A \cdot \exp\left(\frac{j\pi y_0 \sin^2\varphi}{\lambda} - j\frac{2\pi x_0 \sin\varphi}{\lambda}\right) \qquad (7)$$

In formula (7), $r_{\text{beam}}(\varphi)$ is the target reference signal, $A$ is a complex parameter, $\frac{2\pi \sin\varphi}{\lambda}$ is the linear phase parameter, $\frac{\pi \sin^2\varphi}{\lambda}$ is the quadratic phase parameter, $\varphi$ is the spatial angle between the terminal device and the signal adjustment apparatus, $x_0$ is the first position coordinate, and $y_0$ is the second position coordinate.

According to formula (7), the signal $r_{beam}(\varphi)$ received by the signal adjustment apparatus is a linear frequency modulated signal, with its phase value being a quadratic phase related to $\sin\varphi$. If a plurality of different target beams corresponding to $\sin\varphi$ are obtained by changing codebooks of different signal adjustment apparatuses, $x_0$ and $y_0$ can be estimated by using the phase of the main lobe of the target reference signal, where $y_0$ is related to a quadratic phase coefficient, and $x_0$ is related to a linear phase coefficient. The position of the terminal device relative to the signal adjustment apparatus can be determined according to the estimated $x_0$ and $y_0$, thus effectively determining far-field and near-field characteristics of the terminal device.

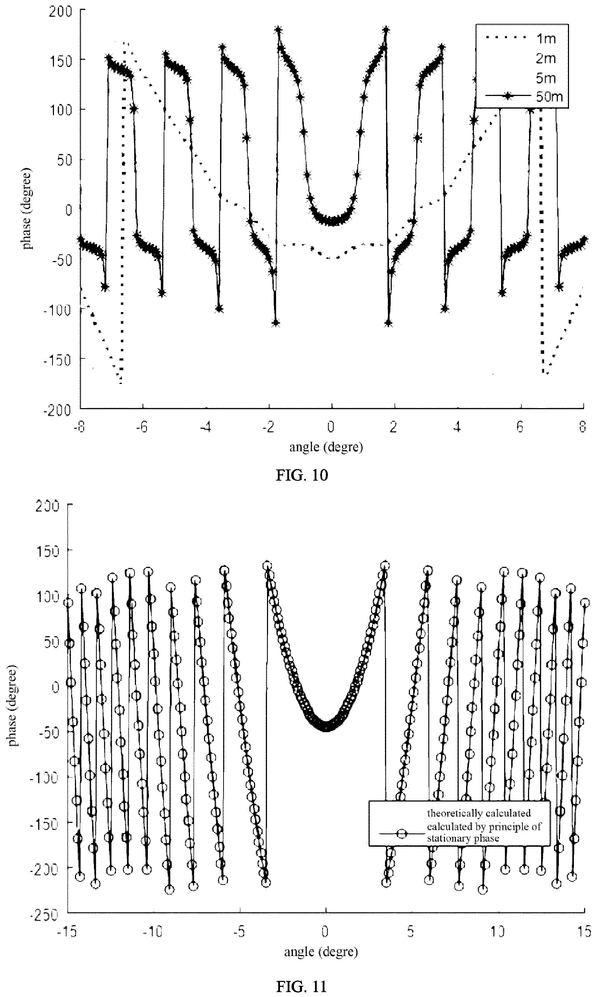

FIG. 10 is a schematic diagram illustrating relationships between phases of target beams and center angles of corresponding codebooks measured by a terminal device and a signal adjustment apparatus under different distance conditions. It can be concluded from FIG. 10 that different distance conditions correspond to different quadratic phase coefficients, and the change between the two facilitates the distance determination.

It should be noted that, when a normal direction distance of the terminal device deviating from the signal adjustment apparatus is quite large, that is, $\varphi$ is quite large, quadratic expansion using only formula (2) is not accurate enough and may require a higher order expansion. However, this does not affect the specific principle of the present disclosure, that is, corresponding calculation can still be carried out according to the principle of this implementation. In this process, derivation calculation can be carried out based on the algorithm by using relevant computer software, or those having ordinary skill in the art can select an adaptive algorithm to carry out the calculation, which is not limited herein.

It should be noted that, FIG. 11 is a diagram illustrating relationships between angles and beam phases theoretically calculated under a near-field condition, and relationships between angles and beam phases approximately calculated using the principle of stationary phase. It can be learned from FIG. 11 that beam phase values theoretically calculated and beam phase values approximately calculated using the principle of stationary phase are highly consistent in the main lobe direction. Therefore, it can be concluded that a theoretical beam can be nearly equal to a quadratic phase of the spatial angle in the main lobe direction. The simulation result also proves the accuracy of results in the practical application scenario of the embodiment. In other words, coordinate measurement results with relatively high accuracy can be calculated by using the signal characteristic of the target reference signal as the phase of the main lobe of the target reference signal.

At the step S322, a first position coordinate and a second position coordinate of the terminal device are calculated according to the linear phase parameter and the quadratic phase parameter.

In this step, the first position coordinate and the second position coordinate of the terminal device can be calculated by the foregoing derived formula (7). In other words, a linear phase parameter and a quadratic phase parameter corresponding to each target reference signal can be obtained through the formula (7). When there are a plurality of target reference signals, a plurality of groups of linear phase parameters and quadratic phase parameters can be obtained, so that the first position coordinate $x_0$ and the second position coordinate $y_0$ of the terminal device can be calculated according to the plurality of groups of linear phase parameters and quadratic phase parameters through the formula (7).

In a possible implementation, it is assumed that the measurement orientation indication information in the codebook indication information is one-dimensional indication information, that is, indication information indicating measurement in the azimuth direction or indication information indicating measurement in the elevation direction. In this case, according to the calculation content disclosed in the foregoing implementation, one linear phase coefficient and one quadratic phase coefficient can be obtained by the measurement in the azimuth direction or the measurement in the elevation direction. When other conditions remain the same, it can be determined that the measurement in the azimuth direction and the measurement in the elevation direction correspond to identical quadratic phase coefficients.

In another possible implementation, it is assumed that the measurement orientation indication information in the codebook indication information is two-dimensional indication information, that is, indication information indicating measurement in two dimensions of the azimuth direction and the elevation direction. In this case, according to the calculation content disclosed in the foregoing implementation, one linear phase coefficient and one quadratic phase coefficient can be calculated through measurement in the azimuth direction, and one linear phase coefficient and one quadratic phase coefficient can also be calculated through measurement in the elevation direction. In other words, when two-dimensional measurement is indicated, data of at least two sets of phase coefficients can be calculated, in which case, the two sets of phase coefficients can be input into formula (7) to calculate a first position coordinate and a second position coordinate of the terminal device in the two-dimensional measurement scenario.

In another possible implementation, as indicated in the foregoing embodiment, in some specific application scenarios, a higher-order expansion of formula (7) may also be performed to calculate a plurality of position coordinates according to more determined phase coefficients, which is still within the protection scope of the embodiment of the present disclosure. For example, it is assumed that the measurement orientation indication information in the codebook indication information is two-dimensional indication information, that is, indication information indicating measurement in two dimensions of the azimuth direction and the elevation direction. In this case, according to the calculation content disclosed in the foregoing implementation, one linear phase coefficient and one quadratic phase coefficient can be calculated through measurement in the azimuth direction, and one linear phase coefficient and one quadratic phase coefficient can also be calculated through measurement in the elevation direction. The quadratic phase coefficients in the azimuth direction and the elevation direction are identical. In other words, when the measurement in two dimensions is indicated, two linear phase coefficients and one quadratic phase coefficient can be calculated, that is, data of three sets of phase coefficients can be obtained. In this case, the three sets of phase coefficients can be input into formula (7) expanded in higher order, to calculate a first position coordinate, a second position coordinate, and a third position coordinate of the terminal device in the two-dimensional measurement scenario.

At the step S323, the position of the transmitting apparatus relative to the signal adjustment apparatus is determined according to the first position coordinate and the second position coordinate.

In this step, when the first position coordinate $x_0$ and the second position coordinate $y_0$ of the terminal device are calculated according to formula (7), an actual position of the terminal device can be determined. Then the position of the terminal device relative to the signal adjustment apparatus can be accurately measured based on the position information of the signal adjustment apparatus determined in advance.

It should be noted that the position information of the signal adjustment apparatus can be predetermined by the base station. For example, the base station sends a position inquiry signal to the signal adjustment apparatus, and the signal adjustment apparatus feeds back feedback information about the position inquiry signal to the base station after receiving the position inquiry signal. The position information of the signal adjustment apparatus may alternatively be further configured by an operator. For example, the operator presets a response at the signal adjustment apparatus. After determining that the position inquiry signal is received, the signal adjustment apparatus inquires its own position according to the position inquiry signal.

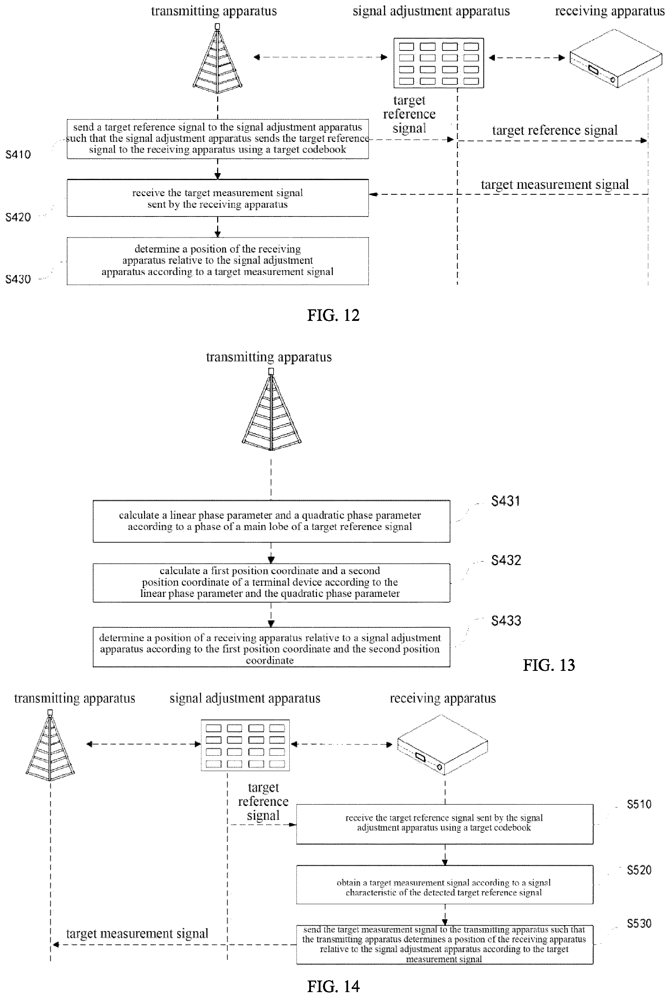

FIG. 12 is a flowchart of a position measurement method provided by another embodiment of the present disclosure. The position measurement method may be performed by a transmitting apparatus, for example, the base station 110 in the embodiment shown in FIG. 1. The power measurement method can be applied to a scenario in which a base station is in a normal working state and network traffic is in peak periods. The position measurement method may include but is not limited to following steps S410, S420, and S430.

At the step S410, a target reference signal is sent to a signal adjustment apparatus such that the signal adjustment apparatus sends the target reference signal to a receiving apparatus using a target codebook.

It should be noted that the target codebook is used by the signal adjustment apparatus to adjust a beam of a received signal to a beam corresponding to the target codebook.

It should be noted that the transmitting apparatus in this embodiment may be, but is not limited to, the base station 110 in the embodiment shown in FIG. 1, and the receiving apparatus in this embodiment may be but is not limited to the terminal device 130 in the embodiment shown in FIG. 1. Accordingly, for the base station, the target reference signal is a downlink target reference signal. Alternatively, those having ordinary skill in the art can select and set a corresponding transmitting apparatus or receiving apparatus according to an actual application scenario, which is not limited by this embodiment. In order to more conveniently describe the application scenario and principles of the present disclosure, the following related embodiments are described with a base station as the transmitting apparatus and a terminal device as the receiving apparatus, but it should not be construed as a limitation to the embodiment of the present disclosure.

In this step, by sending the target reference signal to the signal adjustment apparatus, the signal adjustment apparatus uses the target codebook to send the target reference signal to the terminal device, such that the terminal device generates a target measurement signal according to a signal characteristic of the target reference signal and sends the target measurement signal to the base station in a subsequent step.

It should be noted that both steps S410 and S210 have identical technical concept with the difference only in execution bodies, and can be regarded as essentially equivalent technical contents. Therefore, specific implementation and working principle of the step S410 are similar to those of the step S210. Since the specific implementation and working principle of the step S210 have been described in detail above, the specific implementation and working principle of the step S410 can be learned by referring to those of the step S210. Details are not repeated herein for avoiding redundancy.

At the step S420, the target measurement signal sent by the receiving apparatus is received.

It should be noted that the target measurement signal is obtained by the terminal device according to the signal characteristic of the target reference signal.

It should be noted that the signal characteristic of the target reference signal includes a phase of a main lobe of the target reference signal detected by the terminal device.

In this step, the base station receives the target measurement signal sent by the terminal device so as to measure a position of the terminal device relative to the signal adjustment apparatus according to the received target measurement signal in a subsequent step.

It should be noted that a specific manner of obtaining the target measurement signal is not limited, and those having ordinary skill in the art can obtain the target measurement signal through calculation according to the target reference signal in a specific scenario. A specific implementation will be given below for illustration, and will not be described herein.

At the step S430, a position of the receiving apparatus relative to the signal adjustment apparatus is determined according to the target measurement signal.

In this step, because the base station has received the target measurement signal at the step S420, the base station can measure the position of the terminal device relative to the signal adjustment apparatus according to the target measurement signal in the case of receiving the target measurement signal.

It should be noted that since the target measurement signal is obtained by the receiving apparatus according to the signal characteristic of the target reference signal, the base station performs position measurement according to the signal characteristic of the target reference signal that can be detected, instead of performing position measurement based on distance or time-delay. This reduces harsh requirements on time-delay, an amplitude of an RF device, etc., and optimizes the measurement mode and reduces measurement costs. Therefore, the embodiment of the present disclosure can simply and effectively realize the position measurement of a target while reducing the measurement costs, and further determine, based on a measured position signal of the target, far-field and near-field characteristics of the target relative to the signal adjustment apparatus, so as to carry out the overall communication design more accurately, thereby filling the technical gaps of the existing measurement method.

An embodiment of the present disclosure may also include, but is not limited to, a step S440.

At the step S440, codebook indication information is sent to the signal adjustment apparatus.

In a possible implementation, the codebook indication information includes at least one of the following information:

a codebook index;
beam spacing between adjacent target beams, where the target beams are a plurality of beams corresponding to the plurality of first codebooks;
the number of the target beams; or
measurement orientation indication information.

In this step, the codebook indication information is sent to the signal adjustment apparatus, so that in the following step, the signal adjustment apparatus selects one of the plurality of first codebooks as the target codebook based on the codebook indication information, and then sends the target reference signal to the terminal device using the target codebook selected from the plurality of first codebooks.

It should be noted that in different application scenarios, the composition of the plurality of first codebooks can be different. For example, weights of the plurality of first codebooks in the elevation dimension are identical, or weights of the plurality of first codebooks in the azimuth dimension are identical. For another example, the plurality of first codebooks include two parts of first codebooks, where weights of a first part of first codebooks in the azimuth dimension are identical, and weights of a second part of first codebooks in the elevation dimension are identical. For another example, the plurality of first codebooks include a pair of identical first codebooks for Doppler compensation.

It should be noted that since the codebook indication information, the target beam, the plurality of first codebooks and the measurement orientation indication information, etc. have been described in detail in the foregoing embodiment, details will not be repeated herein for avoiding redundancy.

An embodiment of the present disclosure may also include, but is not limited to, a step S450.

At the step S450, signal indication information is sent to the signal adjustment apparatus such that the signal adjustment apparatus sends, according to the signal indication information, the target reference signal to the receiving apparatus using the target codebook in a target slot.

In some embodiments, the signal indication information may also be used to instruct the signal adjustment apparatus to send the target reference signal through other air interface resources other than the target slot, for example, an OFDM symbol.

In this step, because the signal indication information can instruct the signal adjustment apparatus to send the target reference signal in the target slot, the signal adjustment apparatus can learn a sending slot of the target reference signal according to the signal indication information sent to the signal adjustment apparatus, and thus accurately sends the target reference signal to the terminal device in the target slot.

It should be noted that the base station may further send an indication of the target reference signal to the terminal device such that the terminal device identifies the target reference signal according to the indication, which may be set according to a specific scenario. For example, it is preset that the base station or another similar signal sending apparatus, etc. sends the indication. Taking the base station as an example, the base station configures downlink reference signal indication information for the terminal device. The downlink reference signal indication information is sent from the base station to the terminal device, such that the terminal device identifies, according to the indication information, the received signal sent by the signal adjustment apparatus as the target reference signal.

With reference to FIG. 13, the step S430 is further described in an embodiment of the present disclosure. The step S430 may include but is not limited to following steps S431, S432 and S433.

At the step S431, a linear phase parameter and a quadratic phase parameter are calculated according to the phase of the main lobe of the target reference signal.

In this step, since the phase of the main lobe of the target reference signal can be approximated to a quadratic phase in space, the linear phase parameter and the quadratic phase parameter with high accuracy can be calculated according to the phase of the main lobe of the target reference signal. Then, position coordinates of the terminal device can be calculated based on the obtained linear phase parameter and quadratic phase parameter in a subsequent step, and the position of the terminal device relative to the signal adjustment apparatus can be determined according to the position coordinates of the terminal device.

At the step S432, a first position coordinate and a second position coordinate of the terminal device are calculated according to the linear phase parameter and the quadratic phase parameter.

In this step, the first position coordinate and the second position coordinate of the terminal device can be calculated by the foregoing derived formula (7). In other words, through the formula (7), a linear phase parameter and a quadratic phase parameter corresponding to each target reference signal can be obtained. When there are a plurality of target reference signals, a plurality of groups of linear phase parameters and quadratic phase parameters can be obtained, so that the first position coordinate $x_0$ and the second position coordinate $y_0$ of the terminal device can be calculated according to the plurality of groups of linear phase parameters and quadratic phase parameters through formula (7).

At the step S433, the position of the receiving apparatus relative to the signal adjustment apparatus is determined according to the first position coordinate and the second position coordinate.

In this step, when the first position coordinate $x_0$ and the second position coordinate $y_0$ of the terminal device are calculated according to formula (7), an actual position of the terminal device can be determined. Then the position of the terminal device relative to the signal adjustment apparatus can be accurately measured based on the position information of the signal adjustment apparatus determined in advance.

It should be noted that steps S431 to S433 and steps S321 to S323 all have the identical concept and the same execution body, and can be regarded as essentially equivalent technical contents. Therefore, specific implementations and working principles of the steps S431 to S433 are similar to those of the steps S321 to S323. Since the specific implementations and working principles of S321 to S323 have been described in detail above, the specific implementations and working principles of the steps S431 to S433 can be learned by referring to those of the steps S321 to S323. Details are not repeated herein for avoiding redundancy.

FIG. 14 is a flowchart of a position measurement method provided by another embodiment of the present disclosure. The position measurement method may be performed by a receiving apparatus, for example, the terminal device 130 in the embodiment shown in FIG. 1. The position measurement method may include but is not limited to following steps S510, S520, and S530.

At the step S510, a target reference signal sent by a signal adjustment apparatus using a target codebook is received.

It should be noted that the target codebook is used by the signal adjustment apparatus to adjust a beam of a received signal to a beam corresponding to the target codebook.

In this step, the receiving apparatus receives the target reference signal sent by the signal adjustment apparatus using the target codebook, so as to further obtain a target measurement signal according to a signal characteristic of the target reference signal in a subsequent step and send the target measurement signal to a transmitting apparatus.

It should be noted that the transmitting apparatus in this embodiment may be, but is not limited to, the base station 110 in the embodiment shown in FIG. 1, and the receiving apparatus in this embodiment may be but is not limited to the terminal device 130 in the embodiment shown in FIG. 1. Accordingly, for the base station, the target reference signal is an uplink target reference signal. Alternatively, those having ordinary skill in the art can select and set a corresponding transmitting apparatus or receiving apparatus according to an actual application scenario, which is not limited by this embodiment. In order to more conveniently describe the application scenario and principles of the present disclosure, the following related embodiments are described with a base station as the transmitting apparatus and a terminal device as the receiving apparatus, but it should not be construed as a limitation to the embodiment of the present disclosure.

At the step S520, a target measurement signal is obtained according to the signal characteristic of the detected target reference signal.

In this step, the target measurement signal is obtained according to the signal characteristic of the detected target reference signal, and then sent to the base station in a subsequent step, such that the base station determines a position of the terminal device relative to the signal adjustment apparatus according to the target measurement signal.

At the step S530, the target measurement signal is sent to the transmitting apparatus such that the transmitting apparatus determines a position of the receiving apparatus relative to the signal adjustment apparatus according to the target measurement signal.

In the step, the terminal device sends the target measurement signal to the base station, such that the base station can measure the position of the terminal device relative to the signal adjustment apparatus according to the target measurement signal when receiving the target measurement signal, instead of performing position measurement based on distance or time-delay. This reduces harsh requirements on time-delay, an amplitude of an RF device, etc., and optimizes the measurement mode and reduces measurement costs. Therefore, the embodiment of the present disclosure can simply and effectively realize the position measurement of a target while reducing the measurement costs, and further determine, based on a measured position signal of the target, far-field and near-field characteristics of the target relative to the signal adjustment apparatus, so as to carry out the overall communication design more accurately, thereby filling the technical gaps of the existing measurement method.

It should be noted that the steps S510 to S530 and the steps S410 to S430 all have identical technical concept with the difference only in execution bodies, and can be regarded as essentially equivalent technical contents. Therefore, specific implementations and working principles of the steps S510 to S530 are similar to those of the steps S410 to S430. Since the specific implementations and working principles of S410 to S430 have been described in detail above, the specific implementations and working principles of the steps S510 to S530 can be learned by referring to those of the steps S410 to S430. Details are not repeated herein for avoiding redundancy.

In an embodiment of the present disclosure, the step S520 is further described in the case that the target measurement signal includes a linear phase parameter and a quadratic phase parameter, and the step S520 may include but is not limited to a step S521.

At the step S521, a linear phase parameter and a quadratic phase parameter are calculated according to a phase of a main lobe of the target reference signal.

In this step, since the phase of the main lobe of the target reference signal can be approximated to a quadratic phase in space, the linear phase parameter and the quadratic phase parameter with high accuracy can be calculated according to the phase of the main lobe of the target reference signal. Then, the phase parameters can be sent to the base station in a subsequent step, so that the base station can calculate position coordinates of the terminal device based on the obtained linear phase parameter and quadratic phase parameter, and determine the position of the terminal device relative to the signal adjustment apparatus according to the position coordinates of the terminal device.

In addition, a further embodiment of the present disclosure discloses a signal adjustment apparatus, including a memory, a processor, and a computer program stored in the memory and executable by the processor. The computer program, when executed by the processor, causes the processor to implement the steps S110 and S120 in FIG. 2, S130, S111, S121, S140, S122, S210 and S220 in FIG. 6, S211, S230, S221, S240 or S222 of the position measurement method in one of the foregoing embodiments.

In addition, a further embodiment of the present disclosure discloses a base station, including a memory, a processor, and a computer program stored in the memory and executable by the processor. The computer program, when executed by the processor, causes the processor to implement the steps S310 and S320 in FIG. 7, S330 and S340, S321 to S323 in FIG. 8, S410 to S430 in FIG. 12, S440, S450, or S431 to S433 in FIG. 13 of the position measurement method in one of the foregoing embodiments.

In addition, a further embodiment of the present disclosure discloses a terminal device, including a memory, a processor, and a computer program stored in the memory and executable by the processor. The computer program, when executed by the processor, causes the processor to implement the steps S510 to S530 of FIG. 14 or S521 of the position measurement method in one of the foregoing embodiments.

In addition, a further embodiment of the present disclosure discloses a computer-readable storage medium storing computer-executable instructions for performing the position measurement method described in any of the foregoing embodiments.

Additionally, a further embodiment of the present disclosure discloses a computer program product including a computer program or computer instructions stored in a computer-readable storage medium. When a processor of a computer device reads the computer program or the computer instructions from the computer-readable storage medium, the processor executes the computer program or the computer instructions such that the computer device performs the position measurement method described in any of the foregoing embodiments.

It can be understood by those having ordinary skill in the art that all or some of the steps of the methods and systems disclosed above may be implemented as software, firmware, hardware, and appropriate combinations thereof. Some or all of the physical components may be implemented as software executed by a processor, such as a central processing unit, a digital signal processor or a microprocessor, or as hardware, or as an integrated circuit, such as an application-specific integrated circuit. Such software may be distributed on computer-readable media, which may include computer-readable storage media (or non-transitory media) and communication media (or transitory media). As well known to those of ordinary skill in the art, the term computer-readable storage medium includes volatile and nonvolatile, removable and non-removable media implemented in any method or technique for storing information, such as computer-readable instructions, data structures, program modules or other data. A computer storage medium includes but is not limited to RAM, ROM, EEPROM, flash memory or other memory technologies, CD-ROM, digital versatile disk (DVD) or other optical disk storage, cassettes, magnetic tapes, magnetic disk storage or other magnetic storage devices, or any other medium that can be configured to store desired information and can be accessed by a computer. Furthermore, it is well known to those of ordinary skill in the art that communication media typically contain computer-readable instructions, data structures, program modules or other data in a modulated data signal such as a carrier wave or other transmission mechanism, and may include any information transmission media.

The above is a detailed description of the preferred implementation of the present disclosure, but the present disclosure is not limited to the above-mentioned embodiments. Those having ordinary skill in the art can also make various equivalent modifications or replacements without departing from the scope of the present disclosure, and these equivalent modifications or replacements are all included in the scope defined by the claims of the present disclosure.

**Claims**

1. A position measurement method, performed by a signal adjustment apparatus, comprising:
   receiving a target reference signal and sending the target reference signal to a receiving apparatus using a target codebook, wherein the target codebook is used to adjust a beam of a signal received by the signal adjustment apparatus to a beam corresponding to the target codebook, and a signal characteristic of the target reference signal is used to determine a position of the receiving apparatus relative to the signal adjustment apparatus.

2. The position measurement method of claim 1, wherein the signal adjustment apparatus comprises a plurality of first codebooks, and the target codebook is one of the plurality of first codebooks.

3. The position measurement method of claim 2, further comprising: receiving codebook indication information, wherein the codebook indication information comprises at least one of the following information:

a codebook index;
beam spacing between adj acent target beams, wherein the target beams are a plurality of beams corresponding to the plurality of first codebooks;
a number of the target beams; or
measurement orientation indication information.

4. The position measurement method of claim 1, wherein the receiving apparatus is a base station; and the receiving a target reference signal and sending the target reference signal to a receiving apparatus using a target codebook comprises:
receiving the target reference signal from a transmitting apparatus and sending the target reference signal to the receiving apparatus using the target codebook, such that the receiving apparatus determines a position of the transmitting apparatus relative to the signal adjustment apparatus based on the signal characteristic of the detected target reference signal.

5. The position measurement method of claim 1, wherein the receiving apparatus is a terminal device; and the receiving a target reference signal and sending the target reference signal to a receiving apparatus using a target codebook comprises:
receiving the target reference signal and sending the target reference signal to the receiving apparatus using the target codebook, such that the receiving apparatus sends a target measurement signal to the transmitting apparatus to determine the position of the receiving apparatus relative to the signal adjustment apparatus, wherein the target measurement signal is obtained by the receiving apparatus according to the signal characteristic of the target reference signal.

6. The position measurement method of claim 2, wherein the receiving a target reference signal and sending the target reference signal to a receiving apparatus using a target codebook comprises:
receiving the target reference signal in a target slot, and sending the target reference signal to the receiving apparatus using one of the plurality of first codebooks as the target codebook.

7. The position measurement method of claim 6, further comprising:
receiving signal indication information configured to instruct a transmitting apparatus to send the target reference signal in the target slot.

8. The position measurement method of claim 2, wherein weights of the plurality of first codebooks in an elevation dimension are identical; or weights of the plurality of first codebooks in the azimuth dimension are identical.

9. The position measurement method of claim 2, wherein the plurality of first codebooks comprise two parts of first codebooks, weights of a first part of first codebooks in the azimuth dimension are identical, and weights of a second part of first codebooks in an elevation dimension are identical.

10. The position measurement method of claim 2, wherein the plurality of first codebooks comprise a pair of identical first codebooks for Doppler compensation.

11. The position measurement method of claim 1, wherein the signal adjustment apparatus is a reconfigurable intelligent surface with at least one array element, and the sending the target reference signal to a receiving apparatus using a target codebook comprises:
adjusting the at least one array element according to the target codebook, such that the reconfigurable intelligent surface sends the target reference signal to the receiving apparatus using a target beam corresponding to the target codebook.

12. The position measurement method of claim 1, wherein the signal characteristic of the target reference signal comprises a phase of a main lobe of the target reference signal detected by the receiving apparatus.

13. A position measurement method, performed by a receiving apparatus, comprising:

receiving a target reference signal, wherein the target reference signal is received by a signal adjustment apparatus from a transmitting apparatus and sent to the receiving apparatus using a target codebook, and the target codebook is used by the signal adjustment apparatus to adjust a beam of a received signal to a beam corresponding to the target codebook; and

determining a position of the transmitting apparatus relative to the signal adjustment apparatus based on a signal characteristic of the detected target reference signal.

14. The position measurement method of claim 13, further comprising: sending codebook indication information to the signal adjustment apparatus, wherein the codebook indication information comprises at least one of the following information:

a codebook index;
beam spacing between adjacent target beams, wherein the target beams are a plurality of beams corresponding to a plurality of first codebooks, and the plurality of first codebooks are configured by the signal adjustment apparatus;
a number of the target beams; or
measurement orientation indication information.

15. The position measurement method of claim 14, wherein the target codebook is one of the plurality of first codebooks.

16. The position measurement method of claim 13, further comprising:
sending signal indication information to the signal adjustment apparatus, wherein the signal indication information is configured to instruct the transmitting apparatus to send the target reference signal in a target slot.

17. The position measurement method of claim 14, wherein weights of the plurality of first codebooks in an elevation dimension are identical; or weights of the plurality of first codebooks in the azimuth dimension are identical.

18. The position measurement method of claim 14, wherein the plurality of first codebooks comprise two parts of first codebooks, weights of a first part of first codebooks in the azimuth dimension are identical, and weights of a second part of first codebooks in an elevation dimension are identical.

19. The position measurement method of claim 14, wherein the plurality of first codebooks comprise a pair of identical first codebooks for Doppler compensation.

20. The position measurement method of claim 13, wherein the signal characteristic of the target reference signal comprises a phase of a main lobe of the target reference signal detected by the receiving apparatus.

21. The position measurement method of claim 20, wherein the determining a position of the transmitting apparatus relative to the signal adjustment apparatus based on a signal characteristic of the detected target reference signal comprises:

calculating a linear phase parameter and a quadratic phase parameter according to the phase of the main lobe of the target reference signal;
calculating a first position coordinate and a second position coordinate of the transmitting apparatus according to the linear phase parameter and the quadratic phase parameter; and
determining the position of the transmitting apparatus relative to the signal adjustment apparatus based on the first position coordinate and the second position coordinate.

22. The position measurement method of claim 21, wherein the first position coordinate and the second position coordinate are calculated by the following formula:

$$r_{beam}(\varphi) \approx A \cdot \exp\left( \frac{j\pi y_0 \sin^2 \varphi}{\lambda} - j\frac{2\pi x_0 \sin \varphi}{\lambda} \right);$$

where $r_{beam}(\varphi)$ is the target reference signal, $A$ is a complex parameter, $\dfrac{2\pi \sin\varphi}{\lambda}$ is the linear phase parameter, $\dfrac{\pi \sin^2\varphi}{\lambda}$ is the quadratic phase parameter, is a spatial angle between the transmitting apparatus and the signal adjustment apparatus, $x_0$ is the first position coordinate, and $y_0$ is the second position coordinate.

23. A position measurement method, performed by a transmitting apparatus, the comprising:

sending a target reference signal to a signal adjustment apparatus such that the signal adjustment apparatus sends the target reference signal to a receiving apparatus using a target codebook, wherein the target codebook is used by the signal adjustment apparatus to adjust a beam of a received signal to a beam corresponding to the target codebook;
receiving a target measurement signal sent by the receiving apparatus, wherein the target measurement signal is obtained by the receiving apparatus according to a signal characteristic of the target reference signal; and
determining a position of the receiving apparatus relative to the signal adjustment apparatus according to the target measurement signal.

24. The position measurement method of claim 23, further comprising: sending codebook indication information to the signal adjustment apparatus, wherein the codebook indication information comprises at least one of the following information:

a codebook index;
beam spacing between adj acent target beams, wherein the target beams are a plurality of beams corresponding to a plurality of first codebooks, and the plurality of first codebooks are configured by the signal adjustment apparatus;
a number of the target beams; or
measurement orientation indication information.

25. The position measurement method of claim 24, wherein the target codebook is one of the plurality of first codebooks.

26. The position measurement method of claim 23, further comprising:
sending signal indication information to the signal adjustment apparatus such that the signal adjustment apparatus sends, according to the signal indication information, the target reference signal to the receiving apparatus using the target codebook in a target slot.

27. The position measurement method of claim 24, wherein weights of the plurality of first codebooks in an elevation dimension are identical; or weights of the plurality of first codebooks in the azimuth dimension are identical.

28. The position measurement method of claim 24, wherein the plurality of first codebooks comprise two parts of first codebooks, weights of a first part of first codebooks in the azimuth dimension are identical, and weights of a second part of first codebooks in an elevation dimension are identical.

29. The position measurement method of claim 24, wherein the plurality of first codebooks comprise a pair of identical first codebooks for Doppler compensation.

30. The position measurement method of claim 23, wherein the signal characteristic of the target reference signal comprises a phase of a main lobe of the target reference signal detected by the receiving apparatus.

31. The position measurement method of claim 30, wherein the determining a position of the receiving apparatus relative to the signal adjustment apparatus according to the target measurement signal comprises:

calculating a linear phase parameter and a quadratic phase parameter according to the phase of the main lobe of the target reference signal;
calculating a first position coordinate and a second position coordinate of the receiving apparatus according to the linear phase parameter and the quadratic phase parameter; and
determining the position of the receiving apparatus relative to the signal adjustment apparatus according to the first position coordinate and the second position coordinate.

32. The position measurement method of claim 31, wherein the first position coordinate and the second position coordinate are calculated by the following formula:

$$r_{beam}(\varphi) \approx A \cdot \exp\left( \frac{j\pi y_0 \sin^2 \varphi}{\lambda} - j\frac{2\pi x_0 \sin \varphi}{\lambda} \right);$$

where $r_{beam}((0)$ is the target reference signal, $A$ is a complex parameter, $\frac{2\pi sin\varphi}{\lambda}$ is the linear phase parameter, $\frac{\pi sin^2\varphi}{\lambda}$ is the quadratic phase parameter, $\varphi$ is a spatial angle between the receiving apparatus and the signal adjustment apparatus, $x_0$ is the first position coordinate, and $y_0$ is the second position coordinate.

33. A position measurement method, performed by a receiving apparatus, comprising:

receiving a target reference signal sent by a signal adjustment apparatus using a target codebook, wherein the target codebook is used by the signal adjustment apparatus to adjust a beam of a received signal to a beam corresponding to the target codebook;
obtaining a target measurement signal according to a signal characteristic of the detected target reference signal; and
sending the target measurement signal to a transmitting apparatus such that the transmitting apparatus determines a position of the receiving apparatus relative to the signal adjustment apparatus according to the target measurement signal.

34. The position measurement method of claim 33, wherein the signal characteristic of the target reference signal comprises a phase of a main lobe of the target reference signal detected by the receiving apparatus.

35. The position measurement method of claim 34, wherein the target measurement signal comprises a linear phase parameter and a quadratic phase parameter, and the obtaining a target measurement signal according to a signal characteristic of the detected target reference signal comprises:
calculating the linear phase parameter and the quadratic phase parameter according to the phase of the main lobe of the target reference signal.

36. A signal adjustment apparatus, comprising: a memory, a processor, and a computer program stored in the memory and executable by the processor, wherein the computer program, when executed by the processor, causes the processor to perform the position measurement method of any one of claims 1 to 12.

37. A base station, comprising: a memory, a processor, and a computer program stored in the memory and executable by the processor, wherein the computer program, when executed by the processor, causes the processor to perform the position measurement method of any one of claims 13 to 32.

38. A terminal device, comprising: a memory, a processor, and a computer program stored in the memory and executable by the processor, wherein the computer program, when executed by the processor, causes the processor to perform the position measurement method of any one of claims 33 to 35.

39. A computer-readable storage medium, storing computer-executable instructions configured to cause a computer to perform the position measurement method of any one of claims 1 to 35.

40. A computer program product, comprising a computer program or computer instructions stored in a computer-readable storage medium, from which a processor of a computer device reads the computer program or the computer instructions, wherein the computer program or the computer instructions, when executed by the processor, cause the computer device to perform the position measurement method of any one of claims 1 to 35.

FIG. 1

receiving
apparatus

signal adjustment apparatus

transmitting
apparatus

receive a target reference signal from the transmitting apparatus

target reference
signal

S110

target
reference signal

send the target reference signal to the receiving apparatus using
a targetcodebook, such that the receiving apparatus determines
a position of the transmitting apparatus relative to the
signal adjustment apparatus based on a signal characteristic of
the detected targetreference signal

S120

FIG. 2

FIG. 3

FIG. 4

FIG. 5

signal adjustment apparatus    receiving apparatus

| receive a target reference signal |
| --- |

S210

| send the target reference signal to the receiving apparatus using a target codebook |
| --- |

S220

target
reference
signal

FIG. 6

receiving apparatus  signal adjustment apparatus  transmitting apparatus

target
reference
signal   target reference signal

| receive a target reference signal |
| --- |

S310

| determine a position of the transmitting apparatus relative to the signal adjustment apparatus based on a signal characteristic of the detected target reference signal |
| --- |

S320

FIG. 7

receiving apparatus

| calculate a linear phase parameter and a quadratic phase parameter according to a phase of a main lobe of a target reference signal | S321 |

| calculate a first position coordinate and a second position coordinate of a terminal device according to the linear phase parameter andthe quadratic phase parameter | S322 |

| determine a position of a transmitting apparatus relative to a signal adjustment apparatus according to the first position coordinate and the second position coordinate | S323 |

FIG. 8

$(x_0, y_0)$

$(x, 0)$  0  X

FIG. 9

FIG. 10

FIG. 11

transmitting apparatus        signal adjustment apparatus        receiving apparatus

target
reference
signal

target reference signal

target measurement signal

S410 — send a target reference signal to the signal adjustment apparatus such that the signal adjustment apparatus sends the target reference signal to the receiving apparatus using a target codebook

S420 — receive the target measurement signal sent by the receiving apparatus

S430 — determine a position of the receiving apparatus relative to the signal adjustment apparatus according to a target measurement signal

**FIG. 12**

transmitting apparatus

S431 — calculate a linear phase parameter and a quadratic phase parameter according to a phase of a main lobe of a target reference signal

S432 — calculate a first position coordinate and a second position coordinate of a terminal device according to the linear phase parameter and the quadratic phase parameter

S433 — determine a position of a receiving apparatus relative to a signal adjustment apparatus according to the first position coordinate and the second position coordinate

**FIG. 13**

transmitting apparatus        signal adjustment apparatus        receiving apparatus

target
reference
signal

S510 — receive the target reference signal sent by the signal adjustment apparatus using a target codebook

S520 — obtain a target measurement signal according to a signal characteristic of the detected target reference signal

S530 — send the target measurement signal to the transmitting apparatus such that the transmitting apparatus determines a position of the receiving apparatus relative to the signal adjustment apparatus according to the target measurement signal

target measurement signal

**FIG. 14**

## INTERNATIONAL SEARCH REPORT

| International application No. |
|---|
| **PCT/CN2023/082231** |

**A.    CLASSIFICATION OF SUBJECT MATTER**

H04W 64/00(2009.01)i

According to International Patent Classification (IPC) or to both national classification and IPC

**B.    FIELDS SEARCHED**

Minimum documentation searched (classification system followed by classification symbols)

IPC：H04W,H04B,G01S

Documentation searched other than minimum documentation to the extent that such documents are included in the fields searched

Electronic data base consulted during the international search (name of data base and, where practicable, search terms used)

CNTXT, ENTXTC, VCN, DWPI: 波束, 参考信号, 测量, 位置, 定位, 相位, 码本, 智能反射, 智能表面, 中继, 驻定相位, codebook, RIS, IRS, reconfigurable intelligent surface, repeater, localization, position+, reference signal

**C.    DOCUMENTS CONSIDERED TO BE RELEVANT**

| Category* | Citation of document, with indication, where appropriate, of the relevant passages | Relevant to claim No. |
|---|---|---|
| X | WO 2022015965 A1 (GOOGLE L.L.C.) 20 January 2022 (2022-01-20)<br>   description, paragraphs [0032], [0049]-[0052], [0061]-[0073], [0112]-[0121] and [0169],<br>   and figures 6A-6B and 11 | 1-40 |
| A | CN 111050277 A (HUAZHONG UNIVERSITY OF SCIENCE AND TECHNOLOGY) 21<br>April 2020 (2020-04-21)<br>   entire document | 1-40 |
| A | US 2017366244 A1 (LG ELECTRONICS INC.) 21 December 2017 (2017-12-21)<br>   entire document | 1-40 |
| A | WO 2021136985 A1 (DEEYOOK LOCATION TECHNOLOGIES LTD.) 08 July 2021<br>(2021-07-08)<br>   entire document | 1-40 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **25 May 2023** | **31 May 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/082231**

| Patent document cited in search report | | | Publication date (day/month/year) | Patent family member(s) | | | Publication date (day/month/year) |
|---|---|---|---|---|---|---|---|
| WO | 2022015965 | A1 | 20 January 2022 | CN | 115812159 | A | 17 March 2023 |
| | | | | AU | 2021309975 | A1 | 02 February 2023 |
| | | | | EP | 4162287 | A1 | 12 April 2023 |
| CN | 111050277 | A | 21 April 2020 | | None | | |
| US | 2017366244 | A1 | 21 December 2017 | WO | 2016099079 | A1 | 23 June 2016 |
| WO | 2021136985 | A1 | 08 July 2021 | EP | 4085268 | A1 | 09 November 2022 |
| | | | | KR | 20220130693 | A | 27 September 2022 |
| | | | | JP | 2023508338 | A | 02 March 2023 |
| | | | | CN | 114902063 | A | 12 August 2022 |
| | | | | US | 2020150216 | A1 | 14 May 2020 |
| | | | | US | 2023017758 | A1 | 19 January 2023 |
| | | | | IN | 202247033776 | A | 17 June 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210312867